# EUROPÄISCHE PATENTSCHRIFT

(11) **EP 1 468 309 B1**
(45) Veröffentlichungstag und Bekanntmachung des Hinweises auf die Patenterteilung: **08.08.2007**
(21) Anmeldenummer: 03702517.8
(22) Anmeldetag: 23.01.2003
(51) Int. Cl.: G01T 1/00

(54) **DETEKTOR ZUR ERFASSUNG VON TEILCHENSTRAHLEN UND VERFAHREN ZUR HERSTELLUNG DESSELBEN**
DETECTOR FOR DETECTING PARTICLE BEAMS AND METHOD FOR THE PRODUCTION THEREOF
DETECTEUR CONCU POUR DETECTER DES FAISCEAUX DE PARTICULES ET PROCEDE DE FABRICATION DUDIT DETECTEUR

(30) Priorität: 25.01.2002 DE 10203101; 19.03.2002 DE 10212223
(43) Veröffentlichungstag der Anmeldung: 20.10.2004
(73) Patentinhaber: Gesellschaft für Schwerionenforschung mbH, 64291 Darmstadt (DE)
(72) Erfinder: BERDERMANN, Elèni, 81245 München (DE); DE BOER, Wim, 76229 Karlsruhe (DE)
(74) Vertreter: Boeters, Hans Dietrich
(86) Internationale Anmeldenummer: PCT/EP2003/000705
(87) Internationale Veröffentlichungsnummer: WO 2003/062854

(56) Entgegenhaltungen:
- US-A- 3 665 193
- US-A- 5 773 830
- HAN S K ET AL: "Fabrication and testing of a microstrip particle detector based on highly oriented diamond films" DIAMOND AND RELATED MATERIALS, ELSEVIER SCIENCE PUBLISHERS, AMSTERDAM, NL, Bd. 9, Nr. 3-6, April 2000 (2000-04), Seiten 1008-1012, XP004199908 ISSN: 0925-9635
- SOUW E-K ET AL: "Response of CVD diamond detectors to alpha radiation" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. 400, Nr. 1, 21. November 1997 (1997-11-21), Seiten 69-86, XP004099662 ISSN: 0168-9002
- WANG S G ET AL: "Investigation on polycrystalline CVD diamond-based alpha-particle detectors" MATERIALS RESEARCH BULLETIN, ELSEVIER SCIENCE PUBLISHING, NEW YORK, US, Bd. 37, Nr. 6, Mai 2002 (2002-05), Seiten 1033-1040, XP004361292 ISSN: 0025-5408
- KRAMMER M ET AL: "CVD diamond sensors for charged particle detection" DIAMOND AND RELATED MATERIALS, ELSEVIER SCIENCE PUBLISHERS, AMSTERDAM, NL, Bd. 10, Nr. 9-10, September 2001 (2001-09), Seiten 1778-1782, XP004321120 ISSN: 0925-9635
- BAUER C ET AL: "Recent results on chemical-vapor-deposited diamond microstrip detectors" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. 380, Nr. 1-2, 1. Oktober 1996 (1996-10-01), Seiten 183-185, XP004206410 ISSN: 0168-9002

## Beschreibung

Die Erfindung betrifft einen Detektor zur Erfassung von Teilchenstrahlen, insbesondere von hochintensiven und hochenergetischen Teilchenstrahlen, der eine kristalline Halbleiterplatte mit einer Metallbeschichtung aufweist und auf einem Substrat angeordnet ist, sowie ein Verfahren zu dessen Herstellung gemäß der Gattung der unabhängigen Ansprüche. Unter hochintensiven Teilchenstrahlen werden in diesem Zusammenhang Teilchenstrahlen verstanden, die Pulspakete mit über 10⁵ Teilchen pro Pulspaket und mm², vorzugsweise über 10⁷ Teilchen pro Pulspaket und mm² bis 10¹³ Teilchen pro Pulspaket und mm² umfassen.

Zur Erfassung von Teilchenstrahlen sind unterschiedliche Detektortypen, wie sie von P. Strehl im Handbook of Ion Sources, CRC-Press, 1995, Seiten 385 ff beschrieben werden, bekannt. In einem der Detektortypen, der von Roger Fourme in dem Journal Nuclear Instruments Methods A 392, Seiten 1 bis 11, 1997 beschrieben ist, wird ein Draht verwendet, der von einem Detektorgas umgeben ist, so daß beim Durchgang von Teilchen durch das Detektorgas bzw. das Zählgas ein Signal von dem Draht abgenommen werden kann. Durch Aufspannen von Drahtgittern lässt sich auch eine örtliche Verteilung des Teilchenstrahls messen. Jedoch ist die Auflösung durch den Durchmesser des Drahtes im Bereich von 25 µm und den erforderlichen Abstand von Draht zu Draht begrenzt. Hinzu kommt, daß bei hochintensiver Bestrahlung das Zählgas durch Plasmabildung versagt.

Ein anderer Detektortyp weist eine Halbleiterplatte auf, insbesondere eine monokristalline Siliciumplatte, die beidseitig mit Gold beschichtet ist. Ein derartiger Detektor hat jedoch den Nachteil, dass die Siliciumplatte in ihrem Siliciumgitter des Diamanttyps bei hochintensiver Bestrahlung mit Partikelstrahlen Strahlungsschäden erleidet, was die Erzeugung von Fehlstellen zur Folge hat und die Ladungssammlungseffizienz des Detektors aus Silicium extrem vermindert und den Fehlstrom erhöht.

Versuche, statt der Siliciumplatte polykristalline Diamantplatten zur Messung hochintensiver Partikelstrahlen einzusetzen waren, trotz eines komplexen Aufbaus einer Metallisierung der Diamantplatten aus zunächst einer auf Diamant gut haftenden Titanbeschichtung oder Titan-/Wolframbeschichtung oder einer Chrombeschichtung und einer anschließenden Goldkontaktbeschichtung nicht erfolgreich.

Dokument US 5,773,830 beschreibt einen Detektor mit einer Diamantplatte.

Bisher können hochintensive Partikelstrahlen nur mit relativ unempfindlichen Strahltransformatoren gemessen werden, die den Partikelstrahl mit Induktionswicklungen umschließen und erfassen.

Aufgabe der Erfindung ist es, einen gegenüber Strahltransformatoren empfindlicheren Detektor zur Erfassung eines hochintensiven Teilchenstrahls zu schaffen, der die Nachteile im Stand der Technik überwindet und hochintensive sowie hochenergetische Teilchenstrahlen erfassen kann, ohne intensiv gekühlt zu werden. Ferner ist es Aufgabe der Erfindung, ein Verfahren zur Herstellung eines derartigen Detektors anzugeben.

Gelöst wird diese Aufgabe mit dem Gegenstand der unabhängigen Ansprüche. Vorteilhafte Weiterbildungen der Erfindung ergeben sich aus den abhängigen Ansprüchen.

Erfindungsgemäß weist der Detektor als Halbleiterplatte eine Diamantplatte auf, die beidseitig mit Metallstrukturen beschichtet ist, wobei die Metallstrukturen Aluminium und/oder eine Aluminiumlegierung aufweisen. Die Metallstrukturen bilden Elektroden, die mit unterschiedlichen elektrischen Potentialen über Leiterbahnen auf dem Substrat verbindbar sind. Das Substrat weist eine Keramikplatte mit einer zentralen Öffnung auf, die von der Diamantplatte abgedeckt ist. Dabei können die beidseitigen Metallstrukturen im einfachsten Fall eine Vollbeschichtung auf beiden Seiten der Diamantplatte aufweisen, wobei lediglich eine Randzone auf beiden Seiten um die Metallisierung herum, freigehalten bleibt.

Dieser Detektor hat den Vorteil, daß er die Intensität eines hochintensiven Teilchenstrahls, insbesondere eines Ionenstrahls, messen kann, ohne intensiv gekühlt zu werden. Darüber hinaus können die Elektroden auf der Diamantplatte derart strukturiert sein, daß die Intensitätsverteilung über den Querschnitt des hochenergetischen Teilchenstrahls mit hoher Auflösung gemessen werden kann. Des weiteren kann mit dem Detektor auch die Intensitätsverteilung über der Zeit gemessen werden, so daß sich folgende wesentlichen Vorteile dieses Detektors aus einer Diamantplatte mit Aluminiummetallstrukturen ergeben:
1) eine unerwartet hohe Strahlungsresistenz des Detektoraufbaus bis zu höchsten Intensitäten von bis zu 10¹³ Teilchen pro Pulspaket und pro mm², in Größenordnungen bis zu 100 Terra eV deponierter Energie in dem Detektor, bei Pulsbreiten von 100 ns bis 10 s;
2) eine hohe Zeitauflösung eines Teilchenstrahlimpulses bzw. Pulspaketes mit einer Zeitauflösung im Subnanosekundenbereich,
3) eine hohe Auflösung der räumlichen Verteilung des Strahls im Submillimeterbereich;
4) eine Intensitätserfassung des Strahls linear über mehr als 10 Größenordnungen, so daß selbst bei der höchsten Grö-ßenordnung von ca. 10¹³ Partikeln pro Pulspaket und mm² keine intensive Kühlung erforderlich wird und sogar nur 1 Partikel/mm² mit dem erfindungsgemäßen Detektor erfasst werden kann.
5) eine Messsignalgröße, die um mehr als drei Zehnerpotenzen höher liegt als Messsignale konventioneller Strahltransformatoren.

Diese unerwarteten Vorteile beruhen möglicherweise auf der Art des Diamantenmaterials und der Art der Metallisierung, wobei die Ordnungszahl Z des Aluminiums nahe bei der Ordnungszahl Z des Kohlenstoffs angesiedelt ist, und somit der Ionisationsverlust im Aluminium sehr gut an den Ionisationsverlust im Diamant angepaßt ist. Die beidseitig aluminisierte Diamantplatte bewirkt die Signalerzeugung durch entsprechende Elektronen-Lochpaarbildung in ihrem Volumen, die einen Stromfluß bilden, der an den auf hohen Spannungen liegenden Elektroden, bei elektrischen Feldstärken zwischen den Elektroden im Bereich von 0,5 V/Mikrometer bis 5 V/Mikrometer, im Kristall gemessen werden kann. Dabei stellt sich eine unerwartete Proportionalität zwischen der Intensität des hochenergetischen Teilchenstrahls und dem Signalstrom an den Elektroden des Detektors als weiterer Vorteil heraus.

Ein Detektor aus hochreinem Diamant hat den Vorteil, daß bei hochintensiven und hochenergetischen Teilchenstrahlen, insbesondere bei hochintensiven Ionenstrahlen, ein hohes Aufkommen an Elektronenlochpaaren auftritt, und daß die auf unterschiedlichen Potentialen liegenden Elektroden einen entsprechend hohen Signalstrom liefern können, mit dem ein Oszillograph unmittelbar angesteuert werden kann und somit ohne eine Zwischenverstärkung die Intensität des Ionenstrahls gemessen werden kann.

Da der Detektor aus hochreinem Diamant ein äußerst geringes Rauschen aufweist, kann durch einen geeigneten Verstärker auch ein einzelnes Teilchen nachgewiesen werden, so daß der Gesamtbereich der Intensität vom Einzelteilchen pro mm² bis zu 10¹³ Teilchen Pulspaket und pro mm² gemessen werden kann. Ein derart weiter über mehr als zehn Größenordnungen ausgedehnter Messbereich ist mit herkömmlichen Detektoren nicht erreichbar. Für die unteren Intensitätsbereiche mit bis zu 10⁵ Teilchen pro Pulspaket können durchaus Diamantdetektoren mit herkömmlicher komplexer Metallisierung, eingesetzt werden. Für Intensitätsbereiche über 10⁵ bis 10¹³ Teilchen pro Pulspaket war es selbst mit Diamantplattendetektoren oder auch andere herkömmliche Detektoren, nicht möglich, reproduzierbar und dauerhaft derartigen Pulspakete mit entsprechend hoher Auflösung zu messen. Erst der Aufbau des erfindungsgemäßen Detektors löste überraschend und unerwartet das Intensitätsmessproblem für hochintensive Teilchenstrahlen, insbesondere für einen Bereich zwischen 10⁷ bis 10¹³ Teilchen pro Pulspaket.

Eine weitere bevorzugte Ausführungsform der Erfindung sieht vor, daß die Metallstrukturen auf der Oberseite und der Unterseite der Diamantplatte zwei geschlossene Metallschichten bilden. Derartige geschlossene Metallschichten auf der Unterseite und der Oberseite mit entsprechend dünner Aluminiumauflage haben den Vorteil, daß ein derart strukturierter Detektor die Gesamtzahl der durchgehenden Teilchen oder Intensität des hochenergetischen Teilchenstrahls erfassen kann. Dazu wird die Metallschicht auf der Unterseite auf ein Massepotential gelegt, und die Metallschicht auf der Oberseite auf ein Potential, das eine Feldstärke in der Diamantplatte im Bereich von 0,5 V/*µ*m bis 5 V/*µ*m erzeugt. Das bedeutet, dass bei einer mittleren Dicke der Diamantplatte von 50 *µ*m wird eine Spannung von 25 bis 250 V und bei entsprechend dickeren Diamantplatten entsprechend höhere Spannungen eingesetzt werden.

Um den Austritt der Feldlinien aus dem Randbereich des Detektors zu vermeiden und die dadurch entstehenden elektrischen Durchbrüche oder Kriechströme im Randbereich zu vermeiden, weisen die Randbereiche der Metallschichten auf der Unterseite und der Oberseite des Detektors nichtmetallisierte Randzonen auf. Diese nichtmetallisierten Randzonen weisen eine Breite,auf, die mindestens der Dicke der Diamantplatte entspricht. Mit dieser Metallstruktur wird in vorteilhafter Weise die Kriechstromfestigkeit des Detektors erhöht.

Soll die Intensitätsverteilung der hochenergetischen Teilchen über dem Querschnitt eines Strahls gemessen werden, so können zwei unterschiedliche Metallstrukturanordnungen eingesetzt werden. In einer ersten vorteilhaften Ausführungsform der Erfindung wird dazu auf der Unterseite der Diamantplatte eine geschlossene Metallschicht bereitgestellt, und die Struktur auf der Oberseite der Diamantplatte weist eine Vielzahl von mikroskopisch kleinen Kontaktflächen oder Metallstreifen auf. Unter mikroskopisch klein wird in diesem Zusammenhang eine Kontaktflächengröße oder Streifenbreite verstanden, die mit herkömmlichen mikroskopischen Maßstäben unter einem Lichtmikroskop erkennbar und messbar ist. Diese mikroskopisch kleinen Kontaktflächen oder Metallstreifen, die auf der Oberseite des Detektors gegenüber der Metallschicht auf der Unterseite des Detektors angeordnet sind, können über Bonddrähte mit Umverdrahtungsleitungen auf der Keramikplatte, die ihrerseits mit Auswerteschaltungen und/oder mit Außenanschlüssen des Detektors verbunden sind, elektrisch verbunden sein, oder sie werden über Leiterbahnen auf einer Isolationsschicht auf der Diamantplatte und über Umverdrahtungsleitungen auf der Keramikplatte mit Auswerteschaltungen oder mit den Außenanschlüssen des Detektors verbunden. Bei dieser Ausführungsform der Erfindung wird die Vielzahl von mikroskopisch kleinen Kontaktflächen in einem möglichst engen Rastermaß angeordnet, so daß eine große Flächenauflösung bis herunter zu weniger als 50 Mikrometern erreichbar ist.

Eine weitere Ausführungsform der Erfindung sieht dazu vor, daß die Metallstrukturen ein Gitternetz von Metallstreifen aufweisen, wobei die Metallstreifen auf der Unterseite der Diamantplatte rechtwinklig zu den Metallstreifen der Oberseite der Diamantplatte angeordnet sind. Mit diesem Muster läßt sich ähnlich einem Drahtgittermuster die Diamantplatte in kleine Volumenelemente aufteilen, wobei jedes Volumenelement gegenüberliegende Elektroden aufweist; die von einer entsprechenden elektronischen Versorgungs- und Auswerteschaltung in Zeilen und Spalten abgetastet werden können, so daß ein klares Bild der Intensitätsverteilung über dem Querschnitt des Ionenstrahls mit einem derart strukturierten Detektor möglich wird.

Die einzelnen Streifen können leicht über Bonddrähte oder direkt mit Umverdrahtungsleitungen auf der Keramikplatte verbunden werden, die ihrerseits wiederum Kontaktanschlußflächen aufweist, welche mit Außenanschlüssen des Detektors verbunden werden können. Bei einem Schrittabstand von 20 *µ*m bis 50 *µ*m in jedem Streifenmuster können auf einer Platte von 10 x 10 mm unter Berücksichtigung eines nicht metallisierten Randes von 1 mm etwa 160 Streifen bei einer Schrittweite von 50 *µ*m untergebracht werden, so daß sich 25600 Kreuzungspunkte zwischen den Streifen auf der Oberseite und der Unterseite ergeben und damit 25600 Messpunkte möglich werden. Dieses ermöglicht eine genaue Positionsmessung des.Ionenstrahls und eine genaue Profilmessung des Ionenstrahls.

In einer weiteren Ausführungsform der Erfindung weist der Detektor einen Trägerrahmen auf, auf dem die Komponenten des Detektors fixiert sind. Ein derartiger Trägerrahmen hat den Vorteil, daß er der Keramikplatte eine ausreichende Unterstützung bietet und gleichzeitig den Detektor vor Beschädigungen schützen kann. Ferner kann dieser Trägerrahmen aus einem Metall aufgebaut sein und als Zuleitung für das Massepotential dienen. Dabei wird zwischen Trägerrahmen und Keramikplatte ein elektrisch leitender Gummielastischer. Puffer aus Leitgummi eingebauten, der mechanische Verspannungen der zugempfindlichen Keramikplatte verhindert, so dass eine hohe Lebensdauer des Detektors erreicht wird.

Ferner kann anstelle eines Aluminium-Trägerrahmens ein geschlossenes Detektorgehäuse aus Aluminium die Komponenten des Detektors aufnehmen und fixieren. Durch ein vollständig geschlossenes Detektorgehäuse aus Aluminium wird eine optimale Abschirmung gegen elektrische Störungen wie bei einem Faraday-Käfig gebildet. Ein derartiges Detektorgehäuse hat den Vorteil, dass es der Keramikplatte eine ausreichende Unterstützung bietet und gleichzeitig die Diamantplatte vor Beschädigungen schützen kann. Auch im Detektorgehäuse können gummielastische elektrischleitende Puffer eingebaut werden, um die Keramikplatte vor mechanischen Verspannungen zu schützen. Darüber hinaus kann das Detektorgehäuse aus Aluminium als Zuleitung für das Massepotential eingesetzt werden.

Die Öffnung in der Keramikplatte weist geringfügig kleinere Außendimensionen auf als die Detektorplatte bzw. die Diamantplatte selbst, die diese Öffnung abdeckt. In einer bevorzugten Ausführungsform der Erfindung ist diese Öffnung in der Keramikplatte kreisförmig. Eine derartige kreisförmige Öffnung mit einem entsprechenden Detektor wird dann eingesetzt, wenn erwartet wird, daß der hochintensive und hochenergetische Teilchenstrahl einen kreisrunden Querschnitt aufweist. Wird jedoch der Teilchenstrahl gescannt, so erweist sich eine viereckige Öffnung in der Keramikplatte als Vorteil, so daß in einer weiteren bevorzugten Ausführungsform der Erfindung der Detektor und die Keramikplattenöffnung viereckig ausgebildet sind.

In einer weiteren Ausführungsform der Erfindung ist die Diamantplatte eine selbsttragende, durch chemische Gasphasenabscheidung gebildete polykristalline Diamantplatte, die eine Dicke im Bereich von 10 *µ*m bis 500 *µ*m vorzugsweise im Bereich von 50 *µ*m bis 200 *µ*m aufweist. Da Diamant ein äußerst fester und harter Werkstoff ist, sind Plättchen oder Platten bereits von 10 µm Dicke durchaus selbsttragend herstellbar, so daß ein Dickenbereich von 10 bis 500 µm realisierbar ist. Derartige Diamantplatten können zur Aufnahme der Metallisierung bzw. der Metallstrukturen auf beiden Seiten poliert sein, so daß völlig ebene Oberflächen entstehen. Dabei wird darauf geachtet, daß die Oberseite und die Unterseite planparallel zueinander liegen.

Die Polykristallinität der Diamantplatte in dieser Ausführungsform begrenzt jedoch die Signalhomogenität aufgrund der in der Diamantplatte auftretenden Korngrenzen. Deshalb ist es vorgesehen, in einer weiteren Ausführungsform der Erfindung, eine selbsttragende monokristalline Diamantplatte mit einer Dicke im Bereich von 50 *µ*m bis 500 *µ*m, vorzugsweise von 50 bis 200 *µ*m einzusetzen. Bei Detektoren mit entsprechend strukturierten Elektroden auf jeder Seite der Diamantplatte ist sowohl die Strahlsintensität- und/oder Strahlprofilmessung als auch die Messung der zeitlichen Strahlverteilung unabhängig vom Auftreffort des Partikelstrahls realisierbar. Ferner ist bei einer derartigen Diamantplatte die vorher erwähnte Messauflösung von 25600 Messpunkten pro cm² vorteilhafterweise erzielbar. Dazu kann die monokristalline Diamantplatte eine Umfangslänge von mehreren Zentimetern auf, vorzugsweise von 2 bis 6 cm aufweisen, was einer Fläche von etwa 5 x 5 mm² bis etwa 15 x 15 mm² entspricht.

Die oben erwähnten Umverdrahtungsleitungen auf der Keramikplatte können, wenn keine äußerst feine Struktur im Mikrometerbereich zu realisieren ist, aus gedruckten Dünnfilm- oder Dickfilmleitungen bestehen und zusätzlich passive Bauelemente wie Widerstände, Kondensatoren und Spulen in gleicher Technik aufweisen. Somit kann auf der Keramikplatte eine bereits auswertende oder eine impedanzanpassende Schaltung zusätzlich zu den Umverdrahtungsleitungen vorgesehen werden. Insbesondere ist es von Vorteil, eine Impedanz in Dünnfilmtechnik vorzusehen, die dem Innenwiderstand des auswertenden Oszillographen entspricht. Dieser Innenwiderstand des Oszillographen ist üblicherweise 50 Ω.

Ein Verfahren zur Herstellung eines Detektors zur Erfassung hochenergetischer und hochintensiver Partikelstrahlen, der eine kristalline Halbleiterplatte mit Metallbeschichtung aufweist und auf einem Substrat angeordnet ist, weist folgende Verfahrensschritte auf:
- Bereitstellen einer geeigneten Substratsplatte, vorzugsweise einer monokristallinen Diamantsubstratplatte, oder einer monokristallinen Siliciumplatte oder einer Metallplatte eines Metalls mit einem Schmelzpunkt größer als 1000 °C,
- chemische Gasphasenabscheidung einer Diamantschicht aus Kohlenstoff, auf der Substratsplatte,
- Entfernen der Substratsplatte von der selbsttragenden Diamantschicht zur Bildung einer Diamantplatte,
- Beschichten der Oberseite und der Rückseite der Diamantplatte mit Metallstrukturen,
- Bereitstellen einer Keramikplatte mit zentraler Öffnung und Leiterbahnen und /oder Metallschichten mit Kontaktanschlußflächen und/oder passiven Bauelementen auf ihrer Oberseite und ganzflächiger Metallisierung auf ihrer Rückseite,
- Aufbringen der beidseitig metallisierten Diamantplatten auf die Keramikplatte unter Abdecken der zentralen Öffnung,
- Verbinden der Metallstrukturen der Diamantplatte mit Metallstrukturen auf der Keramikplatte,
- Fixieren der Detektorkomponenten auf einem Trägerrahmen unter Zuhilfenahme eines Halterahmens.

Dieses Verfahren hat den Vorteil, daß schrittweise zunächst das Herzstück des Detektors, nämlich eine Diamantplatte, hergestellt wird. Dazu kann mit dem ersten Schritt in vorteilhafter Weise der Diamantgittertyp beispielsweise einer monokristallinen Diamantsubstratsplatte oder einer Siliciumträgerplatte durch Anordnen von Kohlenstoffatomen auf diesem Diamantgittertyp derartiger Substratsplatten fortgesetzt werden, was bei einem monokritstallinen Diamantsubstrat zu einer monokristallinen Diamantplatte führt. Jedoch enthält im Falle einer Siliciumträgerplatte der Diamantgittertyp beim Abscheiden nicht mehr Siliciumatome, sondern Kohlenstoffatome. Dieser Gitteraufbau mit unterschiedlicher Gitterkonstante führt zu einer polykristallinen Diamantschicht.

Ein weiterer Vorteil dieses Verfahrens ist, daß nach dem Herstellen einer entsprechenden Schicht aus Diamant im Falle einer Siliciumträgerplatte oder einer Metallplatte diese abgetragen werden kann, zumal bei entsprechender Dicke von mindestens 10 µm die Diamantschicht zu einer selbsttragenden Platte geworden ist. Ein Vorteil der Substratsplatte aus einem Metall mit einem Schmelzpunkt über 1000 °C vorzugsweise aus Molybden, hat den Vorteil des Einsatzes einer möglichen hohen Reaktionstemperatur beim Abscheideverfahren einer Diamantbeschichtung, was eine Kohlenstoffabscheidung aus der Gasphase beschleunigen kann. Nach dem Entfernen verbleibt eine polykristalline Diamantplatte einer Dicke von 10 µm bis 1000 µm. Die Substratsplatte kann auf ihrer Oberseite und auf ihrer Rückseite poliert werden, wenn eine ausreichende Dicke zwischen 100 µm und 1000 µm vorzugsweise zwischen 100 µm und 500 µm erreicht ist, so daß eine vollständig ebene Oberfläche für die Metallstrukturen bereitsteht.

Als Metall der Metallstrukturen auf der Diamantplatte wird in vorteilhafter Weise ein Aluminium oder eine Aluminiumlegierung eingesetzt, wobei die Ordnungszahl Z des Aluminiums nahe bei der Ordnungszahl Z des Kohlenstoffs angesiedelt ist, und somit der Ionisationsverlust in dem Aluminium an den Ionisationsverlust in dem Diamant angepaßt ist.

Ein weiterer Vorteil dieses Verfahrens liegt in der Verwendung einer Keramikplatte, die einerseits mikroskopische Teilstrukturen auf der Diamantplatte in makroskopische Metallstrukturen übertragen kann, so daß entsprechend große Außenanschlüsse für den Detektor an der Keramikplatte anbringbar sind. Makroskopisch heißt in diesem Zusammenhang, daß die Abmessungen dieser Strukturen so groß sind, daß sie mit bloßem Auge erkennbar und messbar sind. Diesem Zweck der Vergrößerung der Zugriffselemente dienen auch die entsprechend vorbereiteten Umverdrahtungsleitungen oder Leiterbahnen auf der Keramikplatte. Ohne derartige Umverdrahtungsleitungen und damit ohne derartige Flächen, wie sie die Keramikplatte zur Verfügung stellt, wäre ein Zugriff zu den mikroskopisch kleinen Strukturen auf der Diamantplatte nicht möglich.

Das Fixieren der Detektorkomponenten auf einem Trägerrahmen kann in vorteilhafter Weise durch einen Metallrahmen ebenfalls aus Aluminium sichergestellt werden. Derartige Aluminiumrahmen lassen sich leicht bearbeiten, und somit läßt sich auch eine Keramikplatte bei entsprechend vorbereiteten Strukturen wie z.B. Bohrungen auf dem Trägerrahmen justieren und fixieren. Darüber hinaus weist Aluminium eine hohe Wärmeleitfähigkeit auf, so daß Wärme, die in der Diamantplatte entsteht, über die Keramikplatte an den Aluminiumrahmen und weiter an das Gehäuse einer Anlage, in welcher der Detektor eingesetzt ist, übertragen werden kann.

Zum Bereitstellen einer monokristallinen Siliciumträgerplatte kann zunächst eine monokristalline Siliciumscheibe aus einer monokristallinen Siliciumsäule gesägt werden. Anschließend wird die Scheibenoberfläche, auf der die Diamantplatte abgeschieden werden soll, chemomechanisch geläppt. Gleichzeitig wird sowohl beim Herstellen der monokristallinen Siliciumsäule als auch beim Schneiden der monokristallinen Siliciumscheibe auf eine zur Abscheidung von Diamant günstige Kristallorientierung geachtet. Das hat den Vorteil, daß die Oberfläche der monokristallinen Siliciumscheibe eine Orientierung aufweisen kann, die das orientierte, gleich ausgerichtete Aufwachsen von kristallinem Diamant im Diamantgitter auf der einen Diamantgittertyp aufweisenden Siliciumscheibe fördert.

Bei der chemischen Gasphasenabscheidung einer Diamantschicht aus Kohlenstoff auf der Substratsplatte wird in einer weiteren Ausführungsform der Erfindung eine carboorganische gasförmige Substanz als Reaktionsgas und Wasserstoff als Trägergas eingesetzt. Üblicherweise ist die carboorganische Substanz ein Methangas, das in einem Volumenanteil von 0,5 bis 2 Vol.% dem Wasserstoffgas zugesetzt wird, wobei sich der Kohlenstoff aus der gasförmigen carboorganischen Substanz auf der Substratsplatte abscheidet.

Nach der Abscheidung einer polykristallinen Diamantschicht auf der ein monokristallines Diamantgitter aufweisenden Substratsplatte wird diese von der selbsttragenden Diamantschicht in einem weiteren Ausführungsbeispiel des Verfahrens mittels eines Plasmaätzverfahrens abgetragen. Anstelle eines Plasmaätzverfahrens können auch naßchemische Verfahren eingesetzt werden, bei denen im Falle einer Siliziumträgerplatte als Substratplatte ein Gemisch aus Flußsäure und Salpetersäure eingesetzt, das Silicium auflöst bzw. abätzt, während die Diamantschicht als selbsttragende Diamantplatte erhalten bleibt.

Diese obigen Ätzverfahren haben den Vorteil, daß sie eine selbsttragende polykristalline Diamantplatte freilegen, die anschließend auf Oberseite und Rückseite bei ausreichende Dicke der Diamantplatte zwischen 100 *µ*m und 500 *µ*m chemomechanisch poliert werden kann.

Zum Beschichten der Oberseite und der Rückseite der Diamantplatte mit einer Metallschicht können ein Sputter-, ein Aufdampf- oder auch Sinterverfahren eingesetzt werden. Beim Sputterverfahren wird eine Metallplatte zerstäubt, wobei sich die zerstäubten Atome auf der Oberseite bzw. auf der Rückseite der Diamantplatte abscheiden und eine Metallschicht bilden.

Bei dem Aufdampfverfahren wird ein Aluminium in einem Schmelztiegel unter Vakuum erschmolzen und die Diamantplatte über dem Schmelztiegel in der Weise positioniert, daß sich der Aluminiumdampf auf der Diamantplatte als Metallschicht abscheiden kann. Bei einem Sinterverfahren wird eine Aluminiumpaste auf die Diamantscheibe aufgebracht und in einem entsprechenden Sinterofen das Bindemittel der Aluminiumpaste verdampft und gleichzeitig eine Beschichtung aus Aluminium auf die Diamantplatte aufgesintert.

Mit jedem dieser Verfahren kann zunächst auf der Diamantplatte eine geschlossene Metallschicht abgeschieden werden, die anschließend strukturiert wird, wenn der Detektor eine ortsauflösende Struktur auf seiner Oberseite aufweisen soll.

So wird zum Beschichten der Oberseite und der Rückseite der Diamantplatte mit einer Metallstruktur zunächst eine Metallschicht aufgebracht, die anschließend mittels einer Photolithographie strukturiert wird. Dazu wird ein Photolack auf die Metallschicht aufgebracht und über eine optische Maske die Photolackschicht strukturiert, wodurch schließlich der Photolack nur die Teile der Metallschicht schützt, die als Kontaktschicht oder als Leiterbahnen auf der Oberseite der Diamantplatte verbleiben sollen; während die vom Photolack freigelegten Bereiche durch Belichten und Entwickeln des Photolackes in einem entsprechenden, oftmals alkalischen Bad abgelöst werden.

Diese Verfahren haben den Vorteil, daß sie sehr feinstrukturierte, in mikroskopisch kleinen Abmessungen darstellbare Leiterbahnen und Kontaktflächen auf der Diamantplatte realisieren können. Eine noch höhere Ortsauflösung des Detektors kann erreicht werden, wenn sowohl auf der Oberseite als auch auf der Rückseite ein metallisches Streifenmuster vorgesehen wird. Dieses Streifen- oder Gittermuster auf der Oberseite und der Rückseite wird in eine Metallschicht dadurch eingebracht, daß photolithographisch oder mittels Laserabtrag Längsnuten in die Metallschicht eingebracht werden, wobei Metallstreifen im Mikrometerbereich und Isolationsgräben oder Isolationsnuten im Submikrometerbereich realisierbar sind.

Eine derartige Diamantplatte mit einer metallischen Gitterstruktur auf beiden Seiten benötigt zur Ortsauflösung eine wesentlich komplexere Auswertung und Ansteuerung, um die Ortsverteilung eines hochintensiven Teilchenstrahls zu erfassen, jedoch hat es gleichzeitig den Vorteil, daß die Intensitätsverteilung eines Ionenstrahls mit einer Auflösung im Mikrometerbereich, vorzugsweise mit 25 x 25 µm² bis 250 x 250 µm² großen Pixeln erfolgen kann.

Es kann jedoch eine strukturierte Metallschicht auch unmittelbar aufgebracht werden, wenn der Auftrag des Materials durch eine Maske oder Schablone erfolgt.

Um von den mikroskopisch kleinen Strukturen in Form von Kontaktflächen und Leiterbahnen auf der Diamantplatte auf makroskopische Strukturen übergehen zu können, werden Umverdrahtungsleitungen, Kontaktanschlußflächen und/oder passive Bauelemente auf der größeren Keramikplatte mit makroskopischen Dimensionen realisiert. Diese können teilweise in Dünnfilm- oder Dickfilmtechnik gebildet werden, soweit es passive Bauelemente und Kontaktanschlußflächen betrifft, während Umverdrahtungsleitungen, die von mikroskopischen Abmessungen zu makroskopischen Bauteilen und Anschlußflächen führen sollen, in der gleichen hohen Auflösung zu realisieren sind wie die entsprechenden Strukturen auf der Diamantplatte.

Für einen Detektor, der die Gesamtintensität eines Ionenstrahl-Pulspaketes messen soll, wird auf die metallisierte Diamantplatte beidseitig eine wenige Mikrometer dünne Metallschicht aufgebracht, wobei die obere Metallschicht für den Anschluss an eine entsprechende hohe Spannung vorzusehen ist und die untere Metallschicht an eine Masseleitung auf der Keramikplatte angeschlossen wird.

In einem weiteren bevorzugten Ausführungsbeispiel des Verfahrens wird zum Verbinden der Metallstruktur auf der Oberseite der Diamantplatte mit den Umverdrahtungsleitungen auf der Keramikplatte ein Bondverfahren eingesetzt. Dazu werden entsprechende Bondflächen auf der Keramikplatte vorgesehen, so daß von entsprechenden Kontaktflächen auf der Diamantplatte dann Bonddrähte bis zu den Bondflächen auf der Keramikplatte gebondet werden.

In einem weiteren Ausführungsbeispiel des Verfahrens wird zum Fixieren der Detektorkomponenten auf dem Trägerrahmen ein metallischer Halterahmen vorgesehen. Dieser metallische Halterahmen kann in vorteilhafter Weise auf den Trägerrahmen geschraubt sein und zwischen dem Trägerrahmen und dem Halterahmen die Keramikplatte aufnehmen und fixieren, wobei elektrisch leitende gummielastische Pufferelemente aus Leitgummi zwischen Keramikplatte und Trägerrahmen, sowie zwischen Keramikplatte und Halterahmen angeordnet werden. Dieses Leitgummi garantiert eine sichere Kontaktgabe und schützt die zugempfindliche Keramikplatte vor Beschädigungen bei Montage und beim Betrieb des Detektor. Dazu können in der Keramikplatte entsprechende Bohrungen vorgesehen werden, um eine genaue Ausrichtung der Keramikplatte in bezug auf die Leitgummielement, Trägerplatte und den Halterahmen zu erreichen.

Die Verschraubung zwischen Halterahmen und Trägerrahmen kann gleichzeitig, durch den vorteilhaften Einsatz der Pufferelemente aus Leitgummi der Masseverbindung dienen. Somit ist es lediglich notwendig, eine entsprechende Umverdrahtungsleitung auf der Keramikplatte zu dem Halterahmen vorzusehen, wenn die Schraubverbindung von dem metallischen Halterahmen zu einem metallischen Trägerrahmen ebenfalls aus Metallschrauben besteht, oder bei Metallisierung der Rückseite der Keramikplatte eine Verbindung zu der Metallisierung auf der Unterseite der Diamantplatte vorzusehen.

Der Detektor ist für hochintensive, hochenergetische Teilchenstrahlen einsetzbar, ohne daß seine Ober- oder Rückseite eine Beschädigung aufweist und das Material weder abgesputtert bzw. zerstäubt wird oder verdampft. Auch konnten überraschenderweise keine Löcher im Detektor nach vielfachem Einsatz zur Messung hochintensiver und hochenergetischer Ionenstrahlen festgestellt werden, obgleich von derartigen zu Pulspaketen zeitlich verdichteten und fokussierten Teilchenstrahlen eine intensive mechanische Schockbelastung der Detektorplatte ausgeht. Auch eine partielle kristalline Umstrukturierung des Diamantgitters in Graphitgitterbereiche innerhalb der Diamantplatte des Detektors konnte bei dieser extrem belastenden Verwendung nicht beobachtet werden.

Die Erfindung wird nun anhand von Ausführungsformen mit Bezug auf die beiliegenden Figuren näher erläutert.
- Figur 1: zeigt einen schematischen Querschnitt durch einen Detektor gemäß einer Ausführungsform der Erfindung.
- Figur 2: zeigt eine schematische Draufsicht auf einen Detektor gemäß einer weiteren Ausführungsform der Erfindung.
- Figur 3: zeigt einen schematischen Querschnitt durch eine Diamantplatte eines Detektors.
- Figur 4: zeigt einen schematischen Querschnitt durch einen Detektor gemäß einer dritten Ausführungsform der Erfindung.
- Figur 5: zeigt eine Ansicht einer weiteren Diamantplatte eines Detektors.
- Figur 6: zeigt eine schematische Draufsicht auf einen Bereich einer Metallstruktur einer Oberseite einer Diamantplatte.
- Figur 7: zeigt einen schematischen Querschnitt eines Teils einer Diamantplatte entlang der Schnittlinie A-A der Figur 6.
- Figur 8: zeigt eine schematische Draufsicht auf einen Bereich einer Metallstruktur einer Oberseite einer Diamantplatte.
- Figur 9: zeigt einen schematischen Querschnitt eines Teils einer Diamantplatte entlang der Schnittlinie B-B der Figur 8.
- Figuren: 10 bis 15 zeigen Prinzipskizzen von Zwischenprodukten, die bei der Herstellung einer Diamantplatte einer Ausführungsform der Erfindung schrittweise entstehen.
- Figur 16: zeigt ein Diagramm mit einem Vergleich der Messsignale eines herkömmlichen induktiven Strahlungsmonitors mit Strahltransformator und des erfindungsgemäßen Detektors, wobei die Messsignale von einem hochintensiven Pulspaket ausgelöst wird.

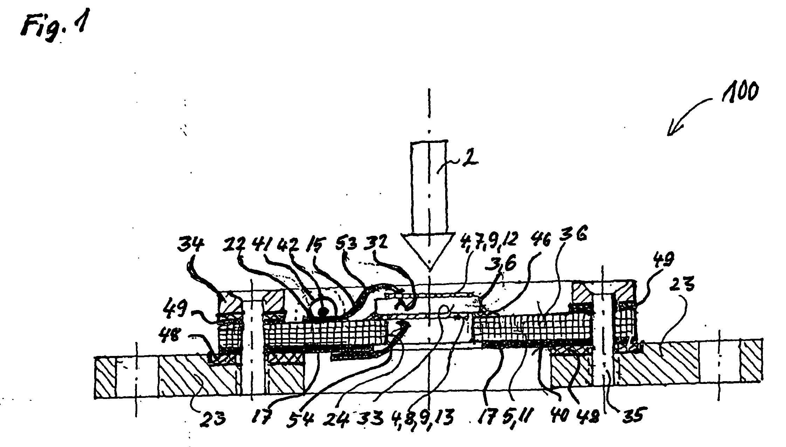

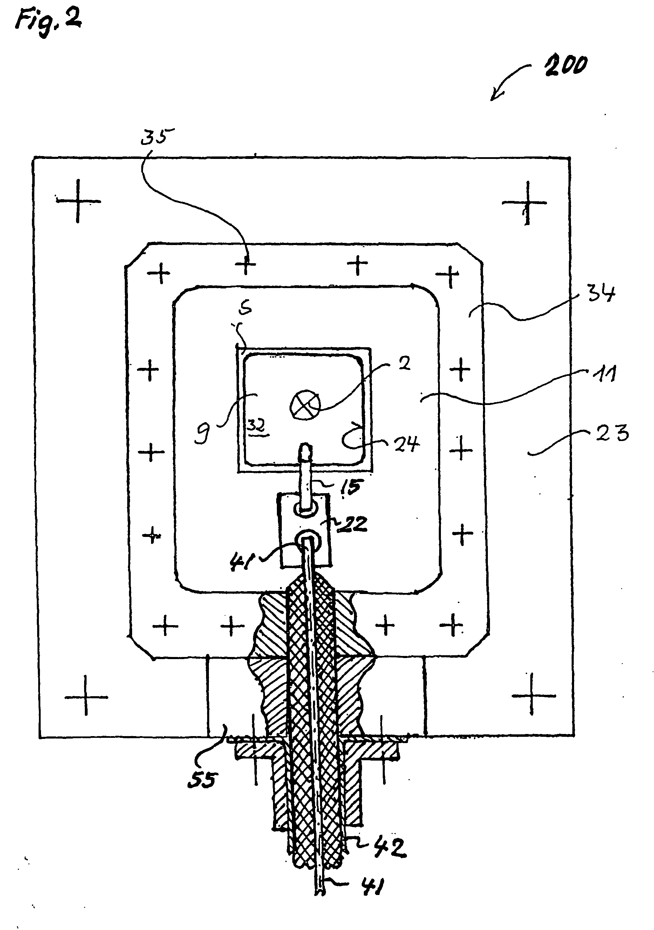

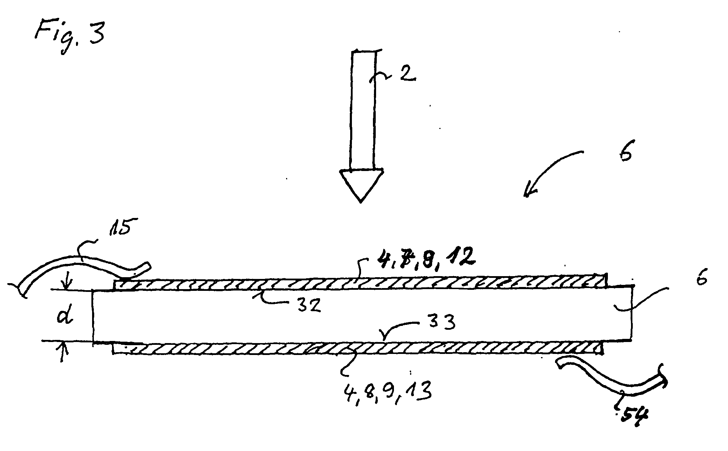

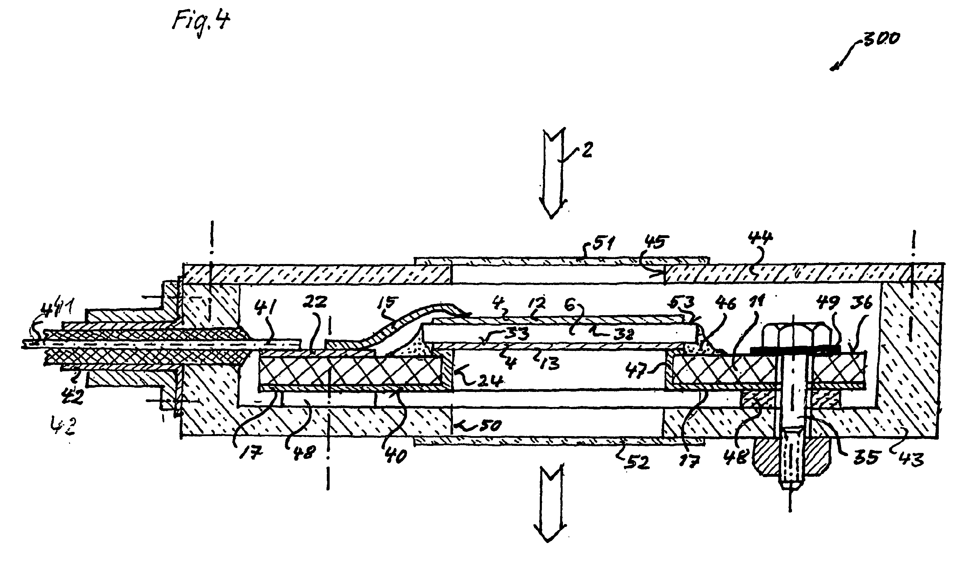

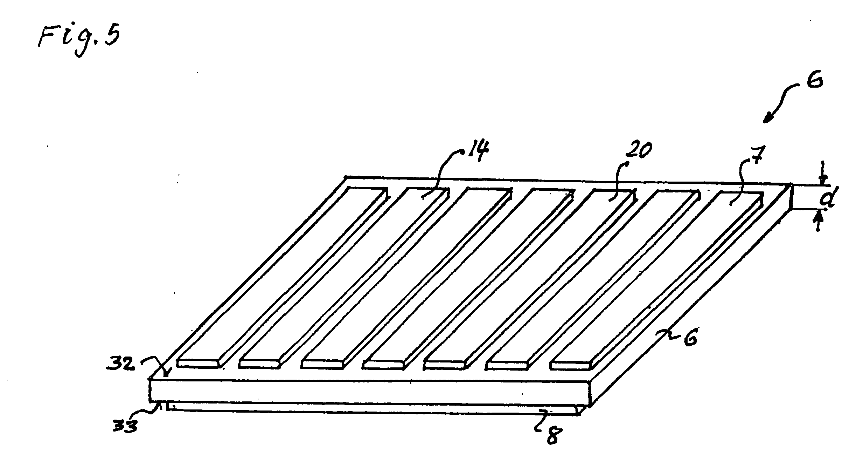

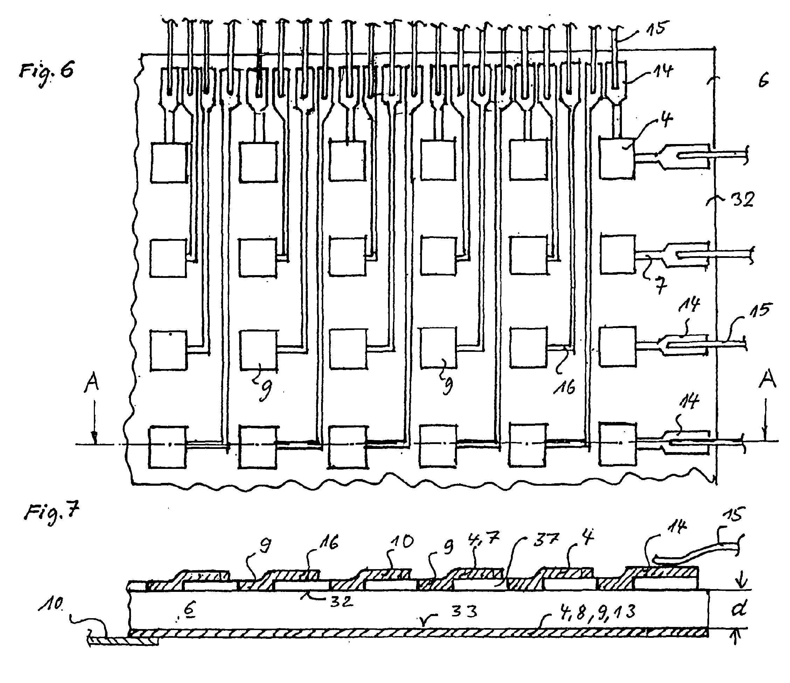

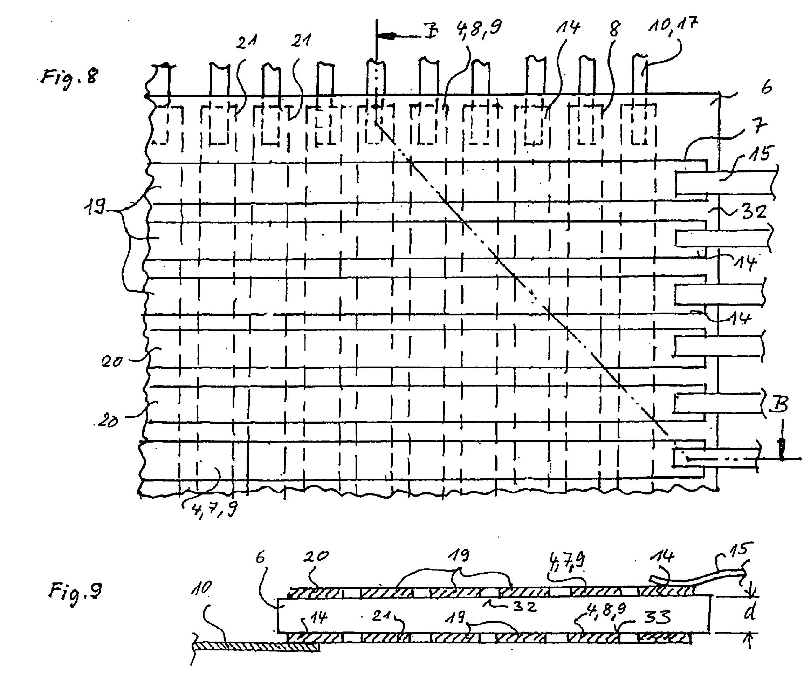

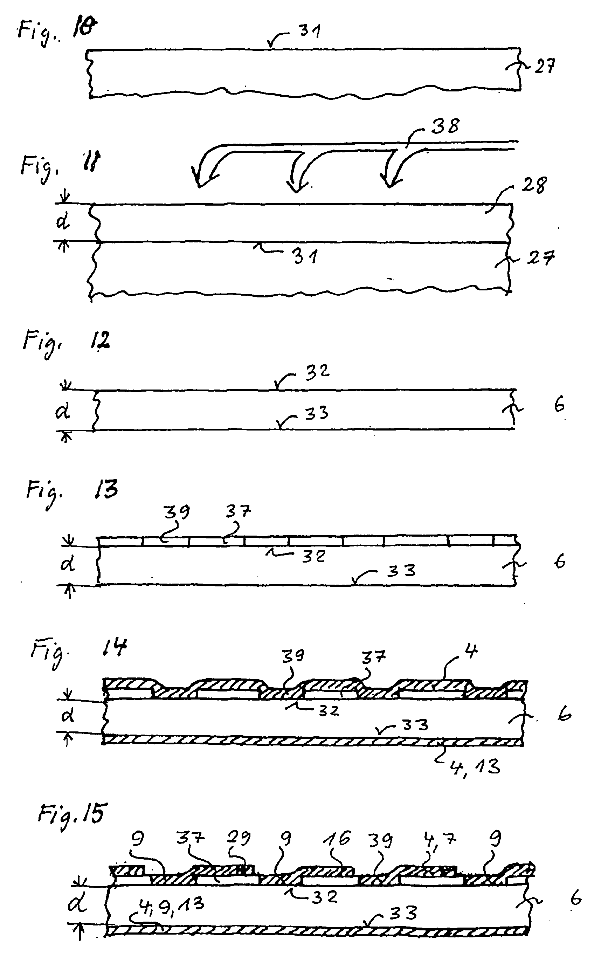

Figur 1 zeigt einen schematischen Querschnitt durch einen Detektor 100 gemäß einer Ausführungsform der Erfindung. Das Bezugszeichen 2 kennzeichnet einen Pfeil, der die Richtung eines hochintensiven und hochenergetischen Partikelstrahls andeutet, der in dieser Ausführungsform der Erfindung durch den Detektor 100 hindurchtritt. Dabei werden alle Oberflächen der Komponenten des Detektors 100, die stromaufwärts der Ionenstrahlrichtung 2 liegen, als Oberseiten bezeichnet und alle Oberflächen der Komponenten des Detektors, die stromabwärts der Ionenstrahlrichtung 2 angeordnet sind, werden als Rückseiten bezeichnet.

Das Bezugszeichen 3 kennzeichnet eine Halbleiterplatte. Das Bezugszeichen 4 kennzeichnet eine Metallbeschichtung, die doppelseitig auf die Halbleiterplatte 3 aufgetragen ist. Das Bezugszeichen 5 kennzeichnet ein Substrat, auf dem die Halbleiterplatte 3 mit ihrer doppelseitigen Metallbeschichtung 4 angeordnet ist. Das Bezugszeichen 6 kennzeichnet eine Diamantplatte, die in dieser Ausführungsform der Erfindung als Halbleiterplatte 3 eingesetzt wird. Das Material einer Diamantplatte 6 weist ein Diamantgitter aus Kohlenstoff auf. Das Bezugszeichen 7 kennzeichnet eine Metallstruktur auf der Oberseite 32 der Diamantplatte 6 und das Bezugszeichen.8 kennzeichnet die Metallstruktur auf der Rückseite 33 der Diamantplatte 6. Das Bezugszeichen 9 kennzeichnet die Elektroden, die in dieser ersten Ausführungsform der Erfindung identisch mit der Metallbeschichtung 4 sind und aus einer geschlossenen Metallschicht 12 auf der Oberseite 32 der Diamantplatte 6 bestehen und aus einer geschlossenen Metallschicht 13 auf der Rückseite 33 der Diamantplatte 6 bestehen, wobei die Randbereiche von Oberseite 32 und Rückseite 33 frei von einer Metallbeschichtung gehalten sind.

Während die Elektrode 9 auf der Oberseite 32 der Diamantplatte 6 über eine Bondverbindung 15 mit einer Kontaktanschlußfläche 22 auf dem Substrat 5 verbunden ist, ist die Elektrode 9 auf der Rückseite 33 der Diamantplatte 6 über eine Metallstreifenbrücke 54 mit einer Metallschicht 17 auf dem Substrat 5 elektrisch verbunden. Das Bezugszeichen 11 kennzeichnet eine Keramikplatte, die als Substrat 5 in dieser Ausführungsform eingesetzt wird.

In dieser Ausführungsform der Erfindung wird die Keramikplatte 11 mittels eines metallischen Halterahmens 34 aus Aluminium auf einem metallischen Trägerrahmen 23 gehalten, der praktisch das Gehäuse des Detektors bildet. Elektrisch leitende gummielastische Bufferelemente 48 und 49, sind zwischen Trägerrahmen 23 und Keramikplatte 11 sowie Leiterrahmen 34 und Keramikplatte 11 angeordnet, und schützen die Keramikplatte 11 vor mechanischer Spannung, wobei zumindest der Puffer 48 zwischen der Rückseite 40 der Keramikplatte 11 und der Trägerplatte 23 auf Massepotential liegt, da der Trägerrahmen 23 mit Massepotential der nicht gezeigten Anlage verbunden ist. Über die Schraubverbindung 35 und den Halterahmen 34 aus Metall wird das Massepotential auf die Rückseite 40 der Keramikplatte 11 gelegt und ist über die Metallstreifenbrücke 54 mit der Metallschicht 13 der Rückseite 33 der Diamantplatte 6 verbunden. Die Kontaktanschlussfläche 22 auf dem Substrat 5 kann eine gedruckte Dünnfilm- oder Dickfilmfläche sein, die mit zusätzlichen nicht gezeigten passiven Bauelementen 26 verbunden ist.

Während die Metallstruktur 8 auf der Rückseite 33 der Diamantplatte 6 über eine Metallstreifenbrücke 54 auf Massepotential liegt, wird über die Kontaktanschlußfläche 22 und den Bonddraht 15 eine Spannung an die Elektrode 9 der Oberseite 32 der Diamantplatte gelegt. Diese Spannung richtet sich nach der Dicke der Diamantplatte 6 und liegt in dieser Ausführungsform der Erfindung bei ca. 1 V pro *µ*m Dicke. Die Dikke der Diamantplatte 6 ist in dieser Ausführungsform etwa 200 µm, so daß über den Bonddraht 15 an die Metallstruktur 7 der Oberseite 32 der Diamantplatte 6 eine Spannung von 200 V angelegt wird. Diese Spannung wird über eine Koaxialleitung 41 zugeführt deren Mantel 42 auf Masse liegt.

Beim Durchdringen des Teilchenstrahls in Pfeilrichtung 2 der Diamantplatte 6 werden Elektronen-Lochpaare generiert, die aufgrund der hohen Feldstärke getrennt werden und einen Strom, der proportional zur Intensität des Ionenstrahls ist, verursachen. Für eine ortsauflösende Erfassung des Ionenstrahls, das heißt, zur Erfassung des Profils des Ionenstrahls über seinem Querschnitt, kann die Metallstruktur 7 auf der Oberseite 32 der Diamantplatte 6 in viele Einzelelektroden strukturiert sein, so daß entsprechend viele Bonddrähte 15 die Meßsignale zu entsprechenden Auswerteschaltungen ableiten. Dazu sind die Kontaktanschlußflächen 22 auf der Keramikplatte 11 entsprechend vervielfältigt und korrespondieren mit entsprechenden, vom Massepotential isolierten, nach außen geführten, in dieser schematischen Zeichnung nicht gezeigten Außenanschlüssen des Detektors 100.

Bei einer weiteren Ausführungsform der Erfindung sind die in Figur 1 mit den Bezugszeichen 7 und 8 gekennzeichneten Metallstrukturen auf der Oberseite und/oder der Rückseite der Diamantplatte 6 keine Metallschichten, sondern gitterförmige Metallstreifen, die auf der Oberseite 32 der Diamantplatte 6 parallel in einer Richtung laufen, zu der die Richtung der Metallstreifen auf der Rückseite 33 der Diamantplatte 6 im rechten Winkel angeordnet sind. In dem Fall entsprechen die Anzahl der Leiterbahnen auf der Keramikplatte 11 der Anzahl der Metallstreifen der Metallstruktur 8 auf der Rückseite der Diamantplatte 6.

Mit der streifenförmigen oder gitterförmigen Struktur der Metallbeschichtung 4 auf der Oberseite 32 und der Rückseite 33 der Diamantplatte 6 kann eine maximale Ortsauflösung erreicht werden, jedoch sind zur Auswertung und Ansteuerung der Kreuzungspunkte der beiden Streifen- oder Gittermuster eine komplexe Ansteuerungs- und Auswerteschaltung erforderlich. Mit einem derartigen Detektor können hochintensive Partikelstrahlen, d.h. Teilchenstrahlen oder Ionenstrahlen oder Elektronenstrahlen, in einer zeitlichen Auflösung von Nanosekunden erfasst werden und in einer örtlichen Auflösung im Bereich von Mikrometern gemessen werden. Mit entsprechender Verstärkungshilfe können auch Einzelpartikel erfasst werden, so daß mit diesem Detektor ein Intensitätsbereich über mehr als 10 Größenordnungen von 1 bis etwa 10¹³ Partikel pro Pulspaket und pro mm² erfasst werden können. Dabei wird erwartet, dass hochintensive Pulspakete in der Größenordnung von 10⁵ Partikel pro Pulspaket und pro mm² bis 10¹³ Partikel pro Pulspaket und pro mm² keine Beschädigungen an dem Detektor hervorrufen. Selbst in einem bevorzugten Bereich zwischen 10⁷ Partikel pro Pulspaket und pro mm² bis 10¹³ Partikel pro Pulspaket und pro mm² kann das Detektorsignal proportional zu der Intensität des Teilchenstrahls sein.

Die Diamantplatte 6 ist bei dieser Ausführungsform der Erfindung polykristallin aus der Gasphase abgeschieden. Die zentrale Öffnung 24 in der Keramikplatte 11 ist der Größe der Diamantplatte 6 angepaßt, die mehrere cm² groß sein kann. Für die Messung eines gescannten Ionenstrahls ist diese zentrale Öffnung 24 und auch die Diamantplatte 6 viereckig. Für einen kreisrunden Ionenstrahl können die Diamantplatte 6 und die zentrale Öffnungen 24 kreisförmig ausgebildet sein.

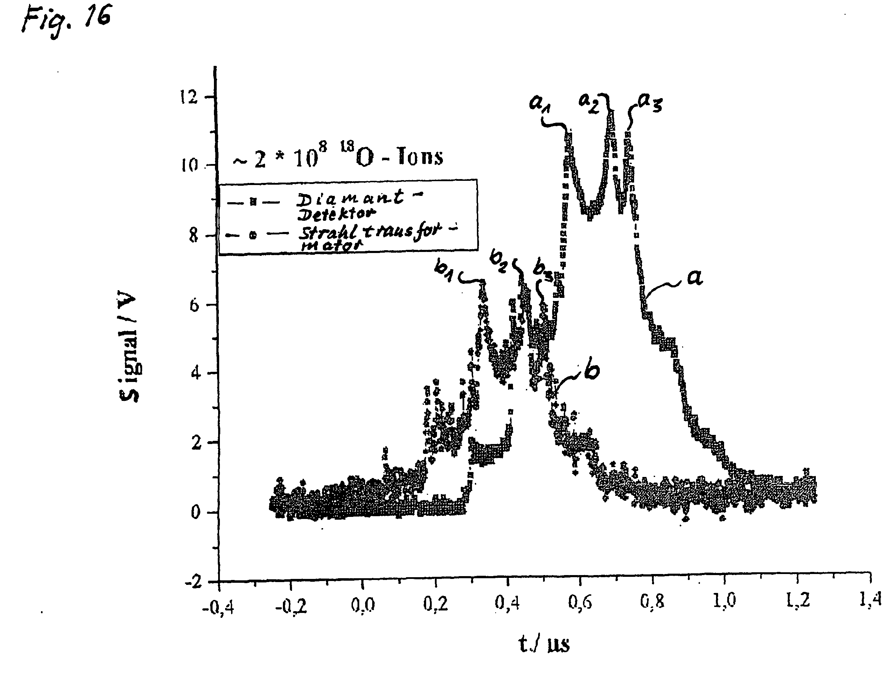

Figur 2 zeigt eine schematische Draufsicht auf einen Detektor 200 gemäß einer weiteren Ausführungsform der Erfindung. Komponenten mit gleichen Funktionen wie in Figur 1 werden mit gleichen Bezugszeichen gekennzeichnet und nicht extra erörtert.

Im Zentrum des Detektors 200 befindet sich eine zentrale Öffnung 24, die von der Diamantplatte 6 abgedeckt wird, durch die der Teilchenstrahl 2 hindurchtritt. Die Oberseite 32 der Diamantplatte 6 ist metallisiert und steht über eine Bondverbindung 15 und eine Kontaktanschlussfläche 22 mit einer Koaxialleitung 41 in Verbindung über die eine Messspannung zugeführt und das Detektorsignal abgeführt wird. Der Koaxialmantel 42 der Koaxialleitung 41 ist an einem Aufsatz 55 des Trägerrahmens 23 fixiert und liegt auf Massepotential.

Die Rückseite 33 der Diamantplatte 6 ist über eine hier nicht sichtbare Metallstreifenbrücke auf der Keramikplatte 11 mit der Rückseite 17 der Keramikplatte 11 verbunden. Der Halterahmen 34 ist über Schraubverbindungen 35 auf dem Trägerrahmen 23 fest verschraubt, so daß die Rückseite der Keramikplatte auf das Gehäuse gelegt ist und somit die Rückseite der Diamantplatte auf ein Massepotential gelegt werden kann. Beim Durchtreten eines Ionenstrahls durch die Diamantplatte 6 entsteht zwischen der Koaxialleitung 41 und dem Koaxialmantel 42, der hier mit der Trägerplatte 23 aus Metall verbunden ist, ein Strom, welcher der Intensität des Partikelstrahls 2 entspricht und zu der Intensität des Teilchenstrahls über mehr als 10 Zehnerpotenzen proportional ist.

Figur 3 zeigt einen schematischen Querschnitt durch eine Diamantplatte 6 eines Detektors 100. Komponenten mit gleichen Funktionen wie in den vorhergehenden Figuren werden mit gleichen Bezugszahlen gekennzeichnet und nicht extra erörtert.

Die Diamantplatte 6 weist eine Dicke d auf, die auch entscheidend ist für die Potentialdifferenz zwischen der geschlossenen Metallschicht 8 auf der Rückseite 33 und der geschlossenen Metallschicht 7 auf der Oberseite 32 der Diamantplatte 6. Während die Metallschicht 13 auf der Rückseite 33 der Diamantplatte 6 auf einer nicht gezeigten Keramikplatte ruht und über eine Metallstreifenbrücke 54 mit einer nicht gezeigten Metallbeschichtung auf der Rückseite der Keramikplatte in Verbindung steht, ist die Metallschicht 12 auf der Oberseite der Diamantplatte 6 mit Hilfe eines Bonddrahtes 15 mit einer Kontaktanschlußfläche auf der Oberseite des Keramiksubstrats verbunden.

Die in Figur 3 gezeigte Ausführungsform ist eine relativ einfache Ausführungsform der Diamantplatte 6 zur Ermittlung der Strahlintensität. Um jedoch den Ionenstrahl ortsabhängig zu vermessen, wird mindestens eine der Metallbeschichtungen 4 strukturiert und in einzelne mikroskopisch kleine und damit nur unter einem Lichtmikroskop messbare Kontaktflächen aufgeteilt. Zur ortsauflösenden Messung ist dann jede dieser Kontaktflächen auf der Oberseite 32 der Diamantplatte 6 mit entsprechenden nichtgezeigten Außenanschlüssen des Detektors verbunden.

Figur 4 zeigt einen Detektor 300 einer dritten Ausführungsform der Erfindung. Komponenten mit gleichen Funktionen, wie in den vorhergehenden Figuren werden mit gleichen Bezugszeichen gekennzeichnet und nicht extra erörtert.

In Figur 4 ist der in Figur 1 gezeigte Trägerrahmen zu einem metallischen Detektorgehäuse 43 erweitert, das von einem metallischen Gehäusedeckel 44 abgeschlossen wird. Der metallische Gehäusedeckel 44 weist eine Öffnung 45 auf, die in Form und Größe der Diamantplatte 6 entspricht und der mindestens die Maße der zentralen Öffnung 24 der Keramikplatte 11 aufweist und auf diese zentrale Öffnung 24 ausgerichtet ist. Das Detektorgehäuse 43 weist eine Öffnung 50 in dem Gehäuseboden auf. Auch diese Öffnung 50 hat mindestens die Abmessungen der zentralen Öffnung 24 der Keramikplatte 11 und ist zu dieser ausgerichtet. Die Gehäusedeckelöffnung 45 und die Gehäusebodenöffnung 50 sind mit metallisierten Kaptonfolien 51 bzw. 52 abgedichtet. Somit, und durch das weitgehend geschlossene Detektorgehäuse aus Metall, das auf Massepotential liegt, ist die Diamantplatte 6 wie in einem Faraday'schen Käfig vor elektrischer Streustrahlung geschützt.

Die Diamantplatte 6 ist in ihrem nicht metallisierten Randbereich 53 mit einem isolierenden Klebstoff 46 auf die Oberseite 36 der Keramikplatte 11 geklebt. In einer anderen vorteilhaften Ausführungsform der Erfindung ist die Keramikplatte 11 auf ihrer Rückseite 40 mit Metall beschichtet, wobei auch die Wandungen der zentralen Öffnung 24 eine Metallbeschichtung 47 aufweisen. Die Metallbeschichtung 47 steht in Kontakt mit der Metallschicht 13 auf der Rückseite 33 der Diamantplatte 6 und mit der Metallbeschichtung 17 der Rückseite 40 der Keramikplatte 11.

Eine elektrisch leitende gummielastischer Puffer 48 ist zwischen dem Detektorgehäuse 43 und der:Metallbeschichtung 17 der Rückseite 40 der Keramikplatte 11 angeordnet. Dieser Puffer 48 bewirkt einerseits, dass das Detektorgehäuse 43 und die Rückseite 40 der Keramikplatte 11 elektrisch leitend verbunden sind und andererseits bildet der Puffer 48 aus Leitgummi einen Schutz der Keramikplatte vor Verspannungen insbesondere vor Zugbelastungen.

Eine weitere elektrisch leitende gummielastische Pufferscheibe 49 kann zwischen einer Befestigungsschraube 49 und der Oberseite 36 der Keramikplatte 11 angeordnet sein. Durch das Detektorgehäuse 43 ist eine Koaxialleitung 41 zur Messspannungszufuhr und Messsignalabgabe isoliert geführt, deren Koaxialmantel 42 auf dem Massenpotential des Detektorgehäuses 43 liegt.

Figur 5 zeigt eine perspektivische Ansicht einer weiteren Diamantplatte 6 eines Detektor. Während in den Figuren 1 bis 4 die Diamantplatte 6 vorzugsweise mit beidseitig geschlossenen metallisierten Ober- und Rückseite 32 bzw. 33 gezeigt werden, ist in der Ausführungsform gemäß Figur 5 die Metallschicht 7 der Oberseite 32 in Metallstreifen 20 mit einer Schrittweite von 25 µm strukturiert, während die Metallschicht 8 der Unterseite 33 eine großflächige Elektrode bildet. Diese Strukturierung ermöglicht eine eindimensionäle örtlichen Bestimmung einer Breite eines Partikelstrahls. Zwei derartige Diamantplatte 6 übereinander gestapelt ermöglichen eine zweidimensionale örtliche Bestimmung der örtlichen Intensitätsverteilung eines Partikelstrahls.

Figur 6 zeigt eine schematische Draufsicht auf einen Bereich einer Metallstruktur 7 einer Oberseite 32 einer Diamantplatte 6. Komponenten mit gleichen Funktionen wie in den vorhergehenden Figuren werden mit gleichen Bezugszahlen gekennzeichnet und nicht extra erörtert.

Die Metallstruktur 7 ist derart strukturiert, daß eine zweidimensionale ortsauflösende Messung eines Teilchen- bzw. Ionenstrahls möglich wird. Dazu sind bei gleichbleibendem Rastermaß mikroskopisch kleine Elektroden 9 mit einer Fläche von 180 x 180 µm² auf der Oberfläche 32 der Diamantplatte 6 gleichmäßig verteilt angeordnet, zwischen denen Leiterbahnen 16 von 0,5 µm Breite in Abständen von 0,5 µm angeordnet sind, so dass für 20 nebeneinander angeordneter Leiterbahnen ein nicht sensitiver Streifen von 20 µm zwischen den 180 µm breiten sensitiven Elektroden erforderlich ist, um die 160 sensitiven Elektroden mit Kontaktflächen 14 im Randbereich der Diamantplatte 6 zu verbinden. Von diesen 160 Kontaktflächen 14 führen einzelne Bonddrähte 15 zu entsprechenden Kontaktanschlußflächen auf einem darunter liegenden, nicht gezeigten Substrat in Form einer Keramikplatte. Jede dieser Elektroden wird über die Bonddrähte 15 und die Leiterbahnen 16 mit einer Messspannung versorgt, so daß an jeder dieser Elektroden 9 die örtliche Intensität eines Ionenstrahls oder Partikelstrahls zweidimensional gemessen werden kann.

Figur 7 zeigt einen schematischen Querschnitt eines Teils einer Diamantplatte 6 entlang der Schnittlinie A-A der Figur 4. Komponenten mit gleichen Funktionen wie in den vorhergehenden Figuren werden mit gleichen Bezugszahlen gekennzeichnet und nicht extra erörtert.

Der Querschnitt durch eine Diamantplatte 6 zeigt, daß die Rückseite 33 der Diamantplatte 6 mit einer geschlossenen Metallschicht von submikroskopischer Dicke als Masseelektrode belegt ist. Das Massepotential kann über eine Leiterbahn 10 auf dem nichtgezeigten Substrat an die Rückseite 33 der Diamantplatte 6 gelegt werden. Um das ortsauflösende Messergebnis an den Elektroden 9 von 180 x 180 µm² Fläche nicht zu verfälschen, sind die Leiterbahnen 16 von 0,5 µm Breite und die Kontaktanschlußflächen 14, die in Figur 4 gezeigt werden, auf einer Isolationsschicht 37 angeordnet, welche die Oberfläche der Diamantplatte 6 elektrisch isoliert und passiviert.

Die Isolationsschicht 37 kann aus Saphir, Siliciumnitrid, Siliciumcarbid, Bornitrid oder Siliciumdioxid aufgebaut sein. Entscheidend ist, daß selbst bei hochintensiven und/oder hochenergetischen Teilchenstrahlen diese Isolationsschicht strahlungsresistent bleibt und nicht elektrisch leitend wird.

Figur 8 zeigt eine schematische Draufsicht auf einen Bereich einer Metallstruktur 7 einer Oberseite 32 einer Diamantplatte 6. Komponenten mit gleichen Funktionen wie in den vorhergehenden Figuren werden mit gleichen Bezugszahlen gekennzeichnet und nicht extra erörtert.

Das Bezugszeichen 19 kennzeichnet ein Gitternetz aus Metallstreifen 20 auf der Oberseite 32 der Diamantplatte 6. Die auf der Oberseite 32 angeordneten Metallstreifen sind mit durchgezogenen Linien markiert, während die Metallstreifen auf der Rückseite der Diamantplatte 6 durch gestrichelte Linien angedeutet werden. Diese Streifenstruktur hat den Vorteil, daß jeder Streifen im Randbereich durch einen Bonddraht 15 in Form eines Flachleiters kontaktiert werden kann, ohne daß Leiterbahnen wie in Figur 6 auf der Oberseite 32 der Diamantplatte 6 vorzusehen sind.

Ein weiterer Vorteil dieser Ausführungsform der Erfindung gegenüber der Ausführungsform nach Figur 6 ist, daß keine Isolationsschichten vorzusehen sind und das ortsauflösende Ergebnis nicht von Leiterbahnen oder Kontaktanschlußflächen verfälscht werden kann. Dieses wird dadurch erreicht, daß die Unterseite der Diamantplatte keine geschlossene Metallfläche in Form eines Metallspiegels aufweist, sondern ebenfalls in Metallstreifen strukturiert ist. Die Ansteuerung und Messelektronik für einen derartigen Detektor mit Diamantplatte wird jedoch komplexer und aufwendiger als in den vorhergehenden Ausführungsformen, zumal jeder Kreuzungspunkt einzeln und nacheinander anzusteuern ist, um eine maximale Ortsauflösung zu gewährleisten. Schon bei einer Streifenstruktur von nur 10 Streifen pro Quadratzentimeter Fläche der Detektorplatte 6 ergeben sich 100 Meßpunkte oder 100 Kreuzungspunkte, die nacheinander anzusteuern sind. Wird die Zahl der Streifen auf der oberen und unteren Seite verdoppelt, so vervierfachen sich bereits die Meßpunkte. Somit kann zwar eine hohe Dichte an Meßpunkten erreicht werden, jedoch steigt natürlich der Aufwand für die Ansteuerungs- und Erfassungsschaltungen quadratisch mit der Anzahl der Metallstreifen auf der Oberseite 7 der Diamantplatte 6.

Figur 9 zeigt einen schematischen Querschnitt eines Teils einer Diamantplatte 6 entlang der Schnittlinie B-B der Figur 8. Komponenten mit gleichen Funktionen wie in den vorhergehenden Figuren werden mit gleichen Bezugszahlen gekennzeichnet und nicht extra erörtert.

Die Figur 9 zeigt, daß die obere Streifenstruktur 20 und die untere Streifenstruktur einander gegenüberliegen, wobei die Metallstreifen 21 der unteren Streifenstruktur unmittelbar über Leiterbahnen 10 auf einem nicht gezeigten Substrat elektrisch verbunden sind. Die oberen Streifen 20 hingegen müssen über Bondverbindungen 15 mit entsprechenden Umverdrahtungsleitungen auf dem Substrat erst verbunden werden. Zur ortsauflösenden Messung werden jeweils an zwei Streifen 20 bzw. 21, nämlich einem Streifen 20 auf der Oberseite 32 und einem Streifen 21 auf der Unterseite 33, eine Messspannung (Signalpuls) ausgelesen, falls durch diesen Punkt des Detektors ein Teilchen durchgegangen ist. Diese Messspannung wird in schneller Folge, beispielsweise mit einem Schieberegister von jedem getroffenen Kreuzungspunkt abgenommen und in einen Speicher geschoben, so daß sämtliche Messpunkte auf der Diamantplatte 6 in weniger als 1 µs erfassbar sind. Ein derartiges Muster hat jedoch eine Grenze, indem die Zahl der Messpunkte nicht beliebig erhöht werden kann, insbesondere falls bei gepulsten Betrieb die Partikelstrahlen gebündelt bzw. fokussiert mit hoher Intensität nur für Bruchteile von Mikrosekunden die Diamantplatte durchdringen.

Die Figuren 10 bis 15 zeigen Prinzipskizzen von Zwischenprodukten, die bei der Herstellung einer Diamantplatte 6 einer Ausführungsform der Erfindung schrittweise entstehen. Komponenten mit gleichen Funktionen wie in den vorhergehenden Figuren werden in den folgende Figuren mit gleichen Bezugszahlen gekennzeichnet und nicht extra erörtert.

Figur 10 zeigt eine ein Substratsplatte 27. Eine derartige Substratplatte 27 kann aus einer Metallplatte eines Metalles, wie Molybden, das einen. Schmelzpunkt über 1000 °C aufweist, hergestellt sein oder eine monokristalline Siliciumscheibe darstellen.

Auf der ätzmechanisch geläppten Oberseite 31 der Substratplatte 27 wird in Figur 11 aus einem Gasstrom 38, der ein Trägergas aus Wasserstoff, das mit einer carboorganischen Substanz angereichert ist, Kohlenstoff auf der Substratplatte 27 abgeschieden, so daß auf der Oberseite 31 eine polykristalline Diamantschicht 28 in einer Dicke d abgeschieden wird.

Die Dicke d liegt bei dieser Ausführungsform mit 200 µm im Bereich von 50 bis 500 µm und ist derart stabil, daß, wie in Figur 12 gezeigt, die Substratplatte 27 weggeätzt werden kann, so daß zunächst eine Rohdiamantplatte aus polykristallinem Material vorliegt. Diese Diamantplatte kann an ihrer Oberseite 32 und ihrer Unterseite 33 ätzmechanisch poliert werden, falls eine ausreichende Dicke d zwischen 100 µm und 500 µm vorliegt, so daß sie eine Diamantplatte 6 mit gleichförmiger Dicke d für einen Detektor aufweisen kann.

Nach der chemischen Gasphasenabscheidung und dem eventuellen Polieren der Oberseite 32 und der Unterseite 33 wird, wie in Figur 13 gezeigt, auf die Oberseite 32 eine strukturierte Isolationsschicht 37 aufgebracht, in der Fenster 39 von beispielweise 180 x 180 *µ*m² zur Oberseite 32 der Diamantplatte 6 offenbleiben, so daß im nächsten Verfahrensschritt, der in Figur 14 gezeigt wird, eine geschlossene Metallbeschichtung 4 sowohl auf der Isolationsschicht 37 als auch in den Fenstern 39 aufgebracht werden kann. Gleichzeitig oder anschließend kann auch die Rückseite 33 mit einer geschlossenen Metallschicht versehen werden.

Anschließend wird die geschlossene Metallbeschichtung 4 auf der Oberseite 32, wie in Figur 15 gezeigt, strukturiert, so daß auf der Isolationsschicht 37 eine Leiterbahnstruktur 29 entsteht, während einzelne voneinander isolierte Elektroden 9 in den Fenstern 39 verbleiben. Die damit erzeugte Struktur entspricht der Struktur, wie sie oben anhand der Figuren 6 und 7 erörtert wird.

Figur 16 zeigt einen Vergleich der Messesignale eines herkömmlichen induktiven Strahlmonitors und des erfindungsgemä-βen Detektors. Bisher werden Strahlungsintensitäten von über 10⁵ Partikel pro Pulspaket mit induktiven Strahlmonitoren mittels eines Strahltransformators gemessen, da konventionelle Diamantplatten mit konventioneller Metallisierung bei derart hohen Intensitäten versagen. Für den Vergleich der Messsignale wurde die Strahlenintensität sukzessive bis zu 10¹⁰ Partikel pro Pulspaket erhöht.

Als Partikelstrahl wurde für den in Figur 16 abgebildeten Vergleich ein sechsfach geladener Sauerstoffstrahl (¹⁶O, 6+) mit einer kinetischen Energie von 300 MeV/amu und einer Intensität von 2x10⁸ Ionen pro Pulspaket vermessen. Dabei wurde die Kurve a mit einem erfindungsgemäßen Diamantdetektor aufgenommen und die Kurve b mit einem konventionellen Strahlmonitor erfasst. Für den in Figur 16 dargestellten Vergleich musste jedoch das Messsignal des konventionellen Strahlmonitors mit dem Faktor 1000 multipliziert werden, um auf der gemeinsamen Darstellung der Figur 16 in sinnvoller Weise die Messsignale des Strahlmonitors mit dem 2000-mal größeren Signalen des erfindungsgemäßen Diamantendetektors vergleichen zu können. Die Darstellung verdeutlicht, dass die Kurven a und b die gleiche zeitliche Intensitätsverteilung mit jeweils drei Spitzenwerten a₁; a₂, a₃ bzw. b₁, b₂, b₃ abbilden, jedoch zeitlich gegeneinander versetzt sind, da der Strahlmonitor stromaufwärts von dem Diamantdetektor bei diesem Messvergleich angeordnet ist. Die Messsignale des Diamantdetektors wurden für den Vergleich weder verstärkt noch mit einem Faktor multipliziert im Gegensatz zu den wesentlich schwächeren Messsignalen des herkömmlichen induktiv gekoppelten Strahlmonitors.

### Bezugszeichenliste

- 100,: Detektor
- 200,: Detektor
- .300,: Detektor
- 2: Teilchenstrahl bzw. Partikelstrahl
- 3: Halbleiterplatte
- 4: Metallbeschichtung
- 5: Substrat
- 6: Diamantplatte
- 7: Metallstruktur auf der Oberseite der Diamantplatte
- 8: Metallstruktur auf der Unterseite der Diamantplatte
- 9: Elektroden
- 10: Leiterbahn auf dem Substrat
- 11: Keramikplatte
- 12: Metallschicht der Oberseite
- 13: Metallschicht der Unterseite
- 14: Kontaktfläche auf der Diamantplatte
- 15: Bonddrähte
- 16: Leiterbahn auf Diamantplatte
- 17: Metallschicht auf der Unterseite der Keramikplatte
- 19.: Gitternetz
- 20: Metallstreifen auf der Oberseite
- 21: Metallstreifen auf der Unterseite der Diamantplatte
- 22: Kontaktanschlußflächen auf der Keramikplatte
- 23: Trägerrahmen
- 24: zentrale Öffnung der Keramikplatte
- 27: Substratplatte zur Abscheidung von Diamant.
- 28: Diamantschicht
- 29: Leiterbahnstruktur
- 31: Oberfläche der Substratplatte
- 32: Oberseite der Diamantplatte
- 33: Rückseite der Diamantplatte
- 34: Halterahmen
- 35: Schraubverbindung
- 36: Oberseite der Keramikplatte
- 37: Isolationsschicht auf der Diamantplatte
- 38: Gasstrom
- 39: Fenster
- 40: Rückseite der Keramikplatte
- 41: Koaxialleitung
- 42: Mantel der Koaxialleitung
- 43: Detektorgehäuse
- 44: Gehäusedeckel
- 45: Gehäusedeckelöffnung
- 46: isolierender Klebstoff
- 47: Metallbeschichtung von Wandungen
- 48: gummielastischer leitender Puffer
- 49: gummielastische leitende Pufferscheibe
- 50: Öffnung im Gehäuseboden
- 51: Kleptonfolie auf Gehäusedeckelöffnung
- 52: Kleptonfolie auf Gehäusebodenöffnung
- 53: Randbereiche der Diamantplatte
- 54: Metallstreifenbrücke
- 55: Aufsatz
- a: Messkurve mit Detektor gemessenen
- b: Messkurve mit Strahltransformator gemessenen
- a₁, a₂, a₃: mit Detektor gemessene Spitzenwerte
- b₁, b₂, b₃: mit Strahltransformator gemessene Spitzenwerte
- d: Dicke der Diamantplatte
- A-A: Schnittlinie in Figur 6
- B-B: Schnittlinie in Figur 8

### Referenzen:

**1. Vieldrahtzähler:**
   a) Roger Fourme, "Position-sensitive gas detectors: MWPCs and their gifted descendants", Nuclear Instruments Methods A 392 (1997) 1-11
**2. Diamantzähler:**
   a) E. Berdermann et al., "The use of CVD-diamond for heavyion detection", Diamond and Related Materials 10 (2001) 1770-1777
   b) W. Adam et al., "Performance of irradiated CVD diamond micro-strip sensors", Nuclear Instruments Methods A 476 (2002) 706-712
3. Berdermann et al., "Diamond Detectors 2001 - Application for Minimum Ionizing Particles", GSI Jahresbericht 2001, p. 214
4. P. Strehl "Ion beam diagnosis", in B. Wolf (Ed.) Handbook of Ion Sources, CRC Press (1995)p. 385

## Patentansprüche

1. Detektor zur Erfassung eines hochintensiven und hochenergetischen Teilchenstrahls (2), der eine kristalline Halbleiterplatte (3) mit Metallbeschichtung (4) aufweist und auf einem Substrat (5) angeordnet ist,
wobei
die Halbleiterplatte (3) eine Diamantplatte (6) ist, die beidseitig mit Metallstrukturen (7, 8) beschichtet ist, wobei die Metallstrukturen (7, 8) Aluminium und/oder eine Aluminiumlegierung aufweisen und wobei die Metallstrukturen (7, 8) Elektroden (9) aufweisen, die mit unterschiedlichen elektrischen Potentialen über Leiterbahnen (10) auf dem Substrat (5) verbindbar sind, **dadurch gekennzeichnet, daß** das Substrat (5) eine Keramikplatte (11) mit einer zentralen Öffnung (24) aufweist, die von der Diamantplatte (6) abgedeckt ist.

2. Detektor nach Anspruch 1,
**dadurch gekennzeichnet,**
**daß** die Metallstrukturen auf Oberseite (7) und Unterseite (8) der Diamantplatte (6) zwei unstrukturierte geschlossene Metallschichten (12, 13) bilden, wobei die Metallschicht (13) der Unterseite (33) ein Massepotential aufweist und der Metallschicht (12) der Oberseite (32) auf einem Potential liegt, bei dem die Diamantplatte (6) eine Feldstärke im Bereich von 0,5 bis 5 Volt pro Mikrometern aufweist.

3. Detektor nach Anspruch 2,
**dadurch gekennzeichnet,**
**daß** die Metallstrukturen (7, 8) auf der Oberseite (32) und auf der Unterseite (33) der Diamantplatte (6) einen nicht metallisierten Randbereich (53) aufweisen.

4. Detektor nach Anspruch 1 oder Anspruch 2,
**dadurch gekennzeichnet,**
**daß** die Diamantplatte (6) an ihrer Oberseite (32) und ihrer Rückseite (33) nicht metallisierte Randbereiche in einer Breite, die mindestens der Dicke der Diamantplatte (6) entspricht, aufweist.

5. Detektor nach einem der vorhergehenden Ansprüche,
**dadurch gekennzeichnet,**
**daß** die Metallstruktur (8) auf der Unterseite (33) der Diamantplatte (6) eine geschlossenen Metallschicht (13) aufweist und die Metallstruktur (7) auf der Oberseite (32) der Diamantplatte (6) eine Vielzahl von mikroskopisch kleinen Kontaktflächen (14) oder Metallstreifen (20) aufweist, die über Bonddrähte (15) und/oder Leiterbahnen (16) auf der Keramikplatte (11) mit Außenanschlüssen des Detektors (100, 200, 300) verbunden sind.

6. Detektor nach einem der folgenden Ansprüche,
**dadurch gekennzeichnet,**
**daß** die Metallstrukturen (7, 8) ein Gitternetz (19) von Metallstreifen (20, 21) aufweisen, wobei die Metallstreifen (21) der Unterseite (33) der Diamantplatte (6) rechtwinklig zu den Metallstreifen (20) der Oberseite (32) der Diamantplatte (6) angeordnet sind

7. Detektor nach einem der folgenden Ansprüche,
**dadurch gekennzeichnet,**
**daß** die Keramikplatte (11) Kontaktanschlußflächen (22) aufweist, die mit Außenanschlüssen des Detektors (100, 200, 300) über eine Koaxialleitung (41) verbunden sind.

8. Detektor nach einem der vorhergehenden Ansprüche,
**dadurch gekennzeichnet,**
**daß** der Detektor (100) einen Trägerrahmen (23), auf dem seine Detektorkomponenten fixiert sind, aufweist.

9. Detektor nach Anspruch einem der vorhergehenden Ansprüche,
**dadurch gekennzeichnet,**
**daß** der Detektor (100, 200, 300) in einem Detektorgehäuse (43) angeordnet ist, das auf Massepotential liegt, und wobei eine metallisierte Rückseite der Keramikplatte (11) über einen gummielastischen elektrisch leitenden Puffer (48) aus Leitgummi mit dem Detektorgehäuse (43) elektrisch verbunden ist.

10. Detektor nach einem der vorhergehenden Ansprüche,
**dadurch gekennzeichnet,**
**daß** die Öffnung (24) in der Keramikplatte (11) kreisförmig oder nahezu viereckig ist.

11. Detektor nach einem der vorhergehenden Ansprüche,
**dadurch gekennzeichnet,**
**daß** die Diamantplatte (6) eine selbsttragende durch chemische Gasphasenabscheidung gebildete polykristalline Diamantplatte (6) ist, die eine Dicke (d) im Bereich von 10 µm bis 1000 µm, vorzugsweise von 100 µm bis 200 µm aufweist.

12. Detektor nach einem der Ansprüche 1 bis 10,
**dadurch gekennzeichnet,**
**daß** die Diamantplatte (6) eine selbsttragende monokristalline Diamantplatte (6) ist, die eine Dicke (d) im Bereich von 10 *µ*m bis 1000 *µ*m, vorzugsweise von 100 *µ*m bis 200 *µ*m aufweist.

13. Detektor nach einem der vorhergehenden Ansprüche,
**dadurch gekennzeichnet,**
**daß** die Keramikplatte (11) gedruckte Dünnfilm- oder Dickfilmleitungen als Umverdrahtungsleitungen oder Leiterbahnen (10) und passive Bauelemente in Dünnfilm- oder Dickfilmtechnik aufweist.

14. Strahlvorrichtung für hochintensive Partikelstrahlen mit 10⁵ bis 10¹³ Partikel pro Pulspaket, vorzugsweise mit 10⁷ bis 10¹³ Partikel pro Pulspaket, wobei die Strahlvorrichtung einen Detektor (100, 200, 300) nach einem der Ansprüche 1 bis 13 aufweist.

15. Verfahren zur Herstellung eines Detektors (1) zur Erfassung hochintensiver und hochenergetischer Partikelstrahlen, der eine kristalline Halbleiterplatte (3) mit Metallbeschichtung (4) aufweist und auf einem Substrat (5) angeordnet ist, wobei das Verfahren folgende Verfahrensschritte aufweist:
- Bereitstellen einer Substratplatte (27),
- chemische Gasphasenabscheidung einer Diamantschicht (28) aus Kohlenstoff auf der Substratplatte (27),
- Entfernen der Substratplatte (27) von der Diamantschicht (28) zur Bildung einer selbsttragenden Diamantplatte (6),
- Beschichten der Oberseite und der Rückseite der Diamantplatte (6) mit Metallstrukturen (7, 8),
- Herstellen einer Keramikplatte,(11) mit zentraler Öffnung (24) und Umverdrahtungsleitungen oder Leiterbahnen mit Kontaktanschlußflächen (2.2) und/oder passiven Bauelementen,
- Aufbringen der beidseitig metallisierten Diamantplatte (6) auf die Keramikplatte (11) unter Abdecken der zentralen Öffnung (24),
- Verbinden der Metallstrukturen (7, 8) der Diamantplatte (6) mit den Leiterbahnen (10) oder Metallschichten (17) auf der Keramikplatte (11),
- Fixieren der Detektorkomponenten auf einem Trägerrahmen (23) .

16. Verfahren nach Anspruch 15,
**dadurch gekennzeichnet,**
**daß** zur chemische Gasphasenabscheidung einer Diamantschicht (28) aus Kohlenstoff auf der Substratplatte(27) eine carboorganische gasförmige Substanz eingesetzt wird.

17. Verfahren nach Anspruch 15 oder Anspruch 16,
**dadurch gekennzeichnet,**
**daß** die gasförmige Substanz Wasserstoff mit 0,2 bis 2 Vol.% Methan aufweist.

18. Verfahren nach einem der Ansprüche 15 bis 17,
**dadurch gekennzeichnet,**
**daß** zum Entfernen der Substratplatte (27) von der selbsttragenden Diamantschicht (28) ein Plasmaätzverfahren eingesetzt wird.

19. Verfahren nach einem der Ansprüche 15 bis 18,
**dadurch gekennzeichnet,**
**daß** zum Entfernen der Substratplatte (27) von der selbsttragenden Diamantschicht (28) ein chemisches Naßätzverfahren eingesetzt wird.

20. Verfahren nach einem der Ansprüche 15 bis 19,
**dadurch gekennzeichnet,**
**daß** zum Beschichten der Oberseite (32) und der Rückseite (33) der Diamantplatte (6) mit einer Metallschicht (12, 13) ein Sputter-, Aufdampf- oder Sinterverfahren eingesetzt wird.

21. Verfahren nach einem der Ansprüche 15 bis 20,
**dadurch gekennzeichnet,**
**daß** zum Beschichten der Oberseite (32) und/oder der Rückseite (33) der Diamantplatte (6) mit einer Metallstruktur (7, 8) ein Sputter- oder Aufdampfverfahren durch eine Maske eingesetzt wird.

22. Verfahren nach einem der Ansprüche 15 bis 21,
**dadurch gekennzeichnet,**
**daß** zum Beschichten der Oberseite (32) und der Rückseite (33) der Diamantplatte (6) mit einer Metallstruktur (7, 8) zunächst eine Metallschicht (12, 13) aufgebracht wird, der anschließend mittels Photolithographie strukturiert wird.

23. Verfahren nach einem der Ansprüche 15 bis 22,
**dadurch gekennzeichnet,**
**daß** zum Beschichten der Oberseite (32) und der Rückseite (33) der Diamantplatte (6) mit einem metallischen Streifenmuster (20, 21) zunächst eine Metallschicht (12, 13) aufgebracht wird, und anschließend Isolationsgräben oder Längsnuten in die Metallschicht (12, 13) photolithographisch eingebracht werden.

24. Verfahren nach einem der Ansprüche 15 bis 23,
**dadurch gekennzeichnet,**
**daß** zum Aufbringen von Umverdrahtungsleitungen oder Leiterbahnen (10), Kontaktanschlußflächen (22), und/oder passiven Bauelementen auf die Keramikplatte (11) Dünnfilm- oder Dickfilmverfahren eingesetzt werden.

25. Verfahren nach einem der Ansprüche 15 bis 24,
**dadurch gekennzeichnet,**
**daß** zum Verbinden der Metallstrukturen (7, 8) der Diamantplatte (6) mit Umverdrahtungsleitungen oder Leiterbahnen (10) auf der Keramikplatte (11) ein Bondverfahren eingesetzt wird.

26. Verfahren nach einem der Ansprüche zu 15 bis 25,
**dadurch gekennzeichnet,**
**daß** zum Fixieren der Detektorkomponenten auf einem Trägerrahmen (23) ein metallischer Halterahmen (34) vorgesehen wird, der gleichzeitig über eine Leiterbahn auf der Keramikplatte (11) eine Massepotentialverbindung herstellt.

27. Verwendung des Detektors gemäß einem der Ansprüche 1 bis 14 zur Erfassung hochintensiver Teilchenstrahlen einer Strahlvorrichtung mit Strahlintensitäten von 10⁵ bis 10¹³ Partikel pro Pulspaket, vorzugsweise mit Strahlintensitäten von 10⁷ bis 10¹³ Partikel pro Pulspaket.

## Claims

1. Detector for detecting a high-intensity and high-energy particle beam (2), which comprises a crystalline semi-conductor plate (3) having a metal coating (4) and which is arranged on a substrate (5), the semi-conductor plate (3) being a diamond plate (6), which is coated on both faces with metal structures (7, 8), the metal structures (7, 8) comprising aluminium and/or an aluminium alloy and the metal structures (7, 8) comprising electrodes (9), which are arranged to be connected to various electrical potentials by way of conductor tracks (10) on the substrate (5),
**characterised in that**
the substrate (5) comprises a ceramic plate (11) having a central orifice (24), which is covered by the diamond plate (6).

2. Detector according to claim 1,
**characterised in that**
the metal structures on the upper face (7) and lower face (8) of the diamond plate (6) form two unstructured continuous metal layers (12, 13), the metal layer (13) of the lower face (33) having a ground potential and the metal layer (12) of the upper face (32) being provided with a potential at which the diamond plate (6) has a field strength in the range from 0.5 to 5 Volts per micrometre.

3. Detector according to claim 2,
**characterised in that**
the metal structures (7, 8) on the upper face (32) and on the lower face (33) of the diamond plate (6) have a non-metallised peripheral region (53).

4. Detector according to claim 1 or claim 2,
**characterised in that**
the diamond plate (6) has, on its upper face (32) and its reverse face (33), non-metallised peripheral regions having a width that corresponds to at least the thickness of the diamond plate (6).

5. Detector according to one of the preceding claims,
**characterised in that**
the metal structure (8) on the lower face (33) of the diamond plate (6) has a continuous metal layer (13) and the metal structure (7) on the upper face (32) of the diamond plate (6) has a multiplicity of microscopically small contact surfaces (14) or metal strips (20), which are connected by way of bonding wires (15) and/or conductor tracks (16) on the ceramic plate (11) to external connections of the detector (100, 200, 300).

6. Detector according to one of the preceding claims,
**characterised in that**
the metal structures (7, 8) comprise a grid network (19) of metal strips (20, 21), the metal strips (21) of the lower face (33) of the diamond plate (6) being arranged at a right angle to the metal strips (20) of the upper face (32) of the diamond plate (6).

7. Detector according to one of the preceding claims,
**characterised in that**
the ceramic plate (11) has contact connection surfaces (22), which are connected to external connections of the detector (100, 200, 300) by way of a coaxial cable (41).

8. Detector according to one of the preceding claims,
**characterised in that**
the detector (100) has a carrier frame (23), on which its detector components are fixed.

9. Detector according to one of the preceding claims,
**characterised in that**
the detector (100, 200, 300) is arranged in a detector housing (43), which is provided with ground potential, and a metallised reverse face of the ceramic plate (11) being electrically connected, by way of an elastomeric electrically conductive buffer (48) of conductive rubber, to the detector housing (43).

10. Detector according to one of the preceding claims,
**characterised in that**
the orifice (24) in the ceramic plate (11) is circular or virtually tetragonal.

11. Detector according to one of the preceding claims,
**characterised in that**
the diamond plate (6) is a self-supporting polycrystalline diamond plate (6) formed by chemical gas phase deposition and having a thickness (d) in the range from 10 *µ*m to 1000 *µ*m, preferably from 100 *µ*m to 200 *µ*m.

12. Detector according to one of claims 1 to 10,
**characterised in that**
the diamond plate (6) is a self-supporting monocrystalline diamond plate (6) having a thickness (d) in the range from 10 *µ*m to 1000 *µ*m, preferably from 100 *µ*m to 200 *µ*m.

13. Detector according to one of the preceding claims,
**characterised in that**
the ceramic plate (11) has printed thin-film or thick-film conductors as interwiring lines or conductor tracks (10) and passive components in thin-film or thick-film technology.

14. Beam apparatus for high-intensity particle beams having 10⁵ to 10¹³ particles per pulse packet, preferably having 10⁷ to 10¹³ particles per pulse packet, the beam apparatus having a detector (100, 200, 300) according to one of claims 1 to 13.

15. Method for the production of a detector (1) for detecting high-intensity and high-energy particle beams, which detector comprises a crystalline semi-conductor plate (3) having a metal coating (4) and which detector is arranged on a substrate (5), the method comprising the following method steps:
- provision of a substrate plate (27),
- chemical gas phase deposition, on the substrate plate (27), of a diamond layer (28) of carbon,
- removal of the substrate plate (27) from the diamond layer (28) to form a self-supporting diamond plate (6),
- coating of the upper face and reverse face of the diamond plate (6) with metal structures (7, 8),
- production of a ceramic plate (11) having a central orifice (24) and interwiring lines or conductor tracks having contact connection surfaces (22) and/or passive components,
- mounting of the diamond plate (6), metallised on both sides, on the ceramic plate (11), the central orifice (24) being covered,
- connection of the metal structures (7, 8) of the diamond plate (6) to the conductor tracks (10) or metal layers (17) on the ceramic plate (11),
- fixing the detector components on a carrier frame (23).

16. Method according to claim 15,
**characterised in that**
for the chemical gas phase deposition of a diamond layer (28) of carbon on the substrate plate (27) a gaseous organocarbon substance is used.

17. Method according to claim 15 or claim 16,
**characterised in that**
the gaseous substance comprises hydrogen together with 0.2 to 2 % by vol. methane.

18. Method according to one of claims 15 to 17,
**characterised in that**
for removal of the substrate plate (27) from the self-supporting diamond layer (28) a plasma etching method is used.

19. Method according to one of claims 15 to 18,
**characterised in that**
for removal of the substrate plate (27) from the self-supporting diamond layer (28) a chemical wet etching method is used.

20. Method according to one of claims 15 to 19,
**characterised in that**
for coating of the upper face (32) and reverse face (33) of the diamond plate (6) with a metal layer (12, 13) a sputtering, vapour-deposition or sintering method is used.

21. Method according to one of claims 15 to 20,
**characterised in that**
for coating of the upper face (32) and/or reverse face (33) of the diamond plate (6) with a metal structure (7, 8) a sputtering or vapour-deposition method employing a mask is used.

22. Method according to one of claims 15 to 21,
**characterised in that**
for coating of the upper face (32) and reverse face (33) of the diamond plate (6) with a metal structure (7, 8) a metal layer (12, 13) is first applied, which is subsequently structured by means of photolithography.

23. Method according to one of claims 15 to 22,
**characterised in that**
for coating of the upper face (32) and reverse face (33) of the diamond plate (6) with a metallic strip pattern (20, 21) a metal layer (12, 13) is first applied and subsequently insulation channels or longitudinal grooves are introduced into the metal layer (12, 13) by photolithographic means.

24. Method according to one of claims 15 to 23,
**characterised in that**
for provision of interwiring lines or conductor tracks (10), contact connection surfaces (22) and/or passive components on the ceramic plate (11) there are used thin-film or thick-film methods.

25. Method according to one of claims 15 to 24,
**characterised in that**
for connection of the metal structures (7, 8) of the diamond plate (6) to interwiring lines or conductor tracks (10) on the ceramic plate (11) there is used a bonding method.

26. Method according to one of claims 15 to 25,
**characterised in that**
for fixing of the detector components on a carrier frame (23) a metallic holding frame (34) is provided, which holding frame at the same time establishes a ground potential connection by way of a conductor track on the ceramic plate (11).

27. Use of the detector according to one of claims 1 to 14 in the detection of high-intensity particle beams of a beam apparatus having beam intensities of 10⁵ to 10¹³ particles per pulse packet, preferably having beam intensities of 10⁷ to 10¹³ particles per pulse packet.

## Revendications

1. Détecteur permettant d'acquérir un faisceau de particules à haute intensité et à haute énergie (2), qui comprend une plaquette semi-conductrice cristalline (3) avec un revêtement métallique (4) et qui est agencé sur un substrat (5), la plaquette semi-conductrice (3) étant une plaquette de diamant (6), qui est recouverte des deux côtés de structures métalliques (7, 8), sachant que les structures métalliques (7, 8) comprennent de l'aluminium et/ou un alliage d'aluminium et que les structures métalliques (7, 8) comprennent des électrodes (9), qui peuvent être connectées sur le substrat (5) avec des potentiels électriques différents par l'intermédiaire de pistes conductrices (10), **caractérisé en ce que** le substrat (5) comprend une plaquette céramique (11) avec une ouverture centrale (24), qui est recouverte par la plaquette de diamant (6).

2. Détecteur selon la revendication 1, **caractérisé en ce que** les structures métalliques sur la face supérieure (7) et la face inférieure (8) de la plaquette de diamant (6) forment deux couches métalliques fermées non structurées (12, 13), sachant que la couche métallique (13) de la face inférieure (33) comprend un potentiel de la masse et la couche métallique (12) de la face supérieure (32) a un potentiel avec lequel la plaquette de diamant (6) comprend une intensité de champ comprise entre 0,5 et 5 volts par micromètre.

3. Détecteur selon la revendication 2, **caractérisé en ce que** les structures métalliques (7, 8) sur la face supérieure (32) et sur la face inférieure (33) de la plaquette de diamant (6) comprennent une marge extérieure non métallisée (53).

4. Détecteur selon la revendication 1 ou 2, **caractérisé en ce que** la plaquette de diamant (6) comprend au niveau de sa face supérieure (32) et de sa face arrière (33) des marges extérieures non métallisées d'une largeur correspondant au moins à l'épaisseur de la plaquette de diamant (6).

5. Détecteur selon l'une des revendications précédentes, **caractérisé en ce que** la structure métallique (8) comprend sur la face supérieure (33) de la plaquette de diamant (6) une couche métallique fermée (13), et la structure métallique (7) comprend sur la face supérieure (32) de la plaquette de diamant (6) une pluralité de petites surfaces de contact microscopiques (14) ou de lamelles métalliques (20) qui sont reliées par l'intermédiaire de fils de liaison (15) et/ou de pistes conductrices (16) sur la plaquette céramique (11) avec les connexions extérieures du détecteur (100, 200, 300).

6. Détecteur selon l'une des revendications suivantes, **caractérisé en ce que** les structures métalliques (7, 8) comprennent un canevas (19) de lamelles métalliques (20, 21), sachant que les lamelles métalliques (21) de la face inférieure (33) de la plaquette de diamant (6) sont agencées perpendiculairement aux lamelles métalliques (20) de la face supérieure (32) de la plaquette de diamant (6).

7. Détecteur selon l'une des revendications suivantes, **caractérisé en ce que** la plaquette céramique (11) comprend des surfaces de connexion de contact (22), qui sont connectées aux connexions extérieures du détecteur (100, 200, 300) par l'intermédiaire d'un câble coaxial (41).

8. Détecteur selon l'une des revendications précédentes, **caractérisé en ce que** le détecteur (100) comprend un cadre support (23) sur lequel sont fixés ses composants de détection.

9. Détecteur selon l'une des revendications précédentes, **caractérisé en ce que** le détecteur (100, 200, 300) est agencé dans un boîtier de détecteur (43) qui s'appuie sur le potentiel de masse, et sachant qu'une face arrière métallisée de la plaquette céramique (11) est connectée électriquement par l'intermédiaire d'un tampon électroconducteur élastique (48) en caoutchouc conducteur au boîtier de détecteur (43).

10. Détecteur selon l'une des revendications précédentes, **caractérisé en ce que** l'ouverture (24) dans la plaquette céramique (11) est de forme circulaire ou quasiment carrée.

11. Détecteur selon l'une des revendications précédentes, **caractérisé en ce que** la plaquette de diamant (6) est une plaquette de diamant polycristalline autoportante (6) formée par déposition chimique en phase vapeur, dont l'épaisseur (d) est comprise entre 10 µm et 1000 µm, de préférence entre 100 µm et 200 µm.

12. Détecteur selon l'une des revendications 1 à 10, **caractérisé en ce que** la plaquette de diamant (6) est une plaquette de diamant monocristalline autoportante (6) dont l'épaisseur (d) est comprise entre 10 µm et 1000 µm, de préférence entre 100 µm et 200 µm.

13. Détecteur selon l'une des revendications précédentes, **caractérisé en ce que** la plaquette céramique (11) comprend des circuits imprimés à couche mince ou à couche épaisse en tant que circuits de câblage ou pistes conductrices (10) et des composants passifs de la technique à couche mince ou à couche épaisse.

14. Dispositif de faisceaux pour des faisceaux de particules à haute intensité avec 10⁵ à 10¹³ particules par paquet d'impulsion, de préférence 10⁷ à 10¹³ particules par paquet d'impulsion, sachant que le dispositif de faisceaux comprend un détecteur (100, 200, 300) selon l'une des revendications 1 à 14.

15. Procédé pour la fabrication d'un détecteur (1) permettant d'acquérir des faisceaux de particules à haute intensité et à haute énergie, qui comprend une plaquette semi-conductrice cristalline (3) avec un revêtement métallique (4) et qui est agencé sur un substrat (5), sachant que le procédé comprend les étapes de procédé consistant à :
- préparer une plaquette de substrat (27),
- déposer par déposition chimique en phase vapeur une couche de diamant (28) en carbone sur la plaquette de substrat (27),
- retirer la couche de diamant (28) de la plaquette de substrat (27) afin d'obtenir une plaquette de diamant autoportante (6),
- recouvrir la face supérieure et la face arrière de la plaquette de diamant (6) de structures métalliques (7, 8),
- fabriquer une plaquette céramique (11) munie d'une ouverture centrale (24) et de circuits de câblage ou de pistes conductrices avec des surfaces de connexion de contact (22) et/ou des composants passifs,
- appliquer la plaquette de diamant métallisée des deux côtés (6) sur la plaquette céramique (11) en recouvrant l'ouverture centrale (24),
- connecter les structures métalliques (7, 8) de la plaquette de diamant (6) avec les pistes conductrices (10) ou les couches métalliques (17) sur la plaquette céramique (11),
- fixer les composants du détecteur sur un cadre support (23).

16. Procédé selon la revendication 15, **caractérisé en ce que** pour la déposition chimique en phase vapeur d'une couche de diamant (28) en carbone sur la plaquette de substrat (27), une substance gazéiforme de carbone organique est utilisée.

17. Procédé selon la revendication 15 ou 16, **caractérisé en ce que** la substance gazéiforme comprend de l'hydrogène avec 0,2 à 2 Vol.-% de méthane.

18. Procédé selon l'une des revendications 15 à 17, **caractérisé en ce que** pour retirer la couche de diamant autoportante (28) de la plaquette de substrat (27), un procédé d'attaque par plasma est utilisé.

19. Procédé selon l'une des revendications 15 à 18, **caractérisé en ce que** pour retirer la couche de diamant autoportante (28) de la plaquette de diamant (27), un procédé d'attaque chimique humide est utilisé.

20. Procédé selon l'une des revendications 15 à 19, **caractérisé en ce que** pour recouvrir la face supérieure (32) et la face arrière (33) de la plaquette de diamant (6) d'une couche métallique (12, 13), un procédé de pulvérisation cathodique, de vaporisation ou de frittage est utilisé.

21. Procédé selon l'une des revendications 15 à 20, **caractérisé en ce que** pour recouvrir la face supérieure (32) et/ou la face arrière (33) de la plaquette de diamant (6) d'une structure métallique (7, 8), un procédé de pulvérisation cathodique ou de vaporisation au moyen d'un masque est utilisé.

22. Procédé selon l'une des revendications 15 à 21, **caractérisé en ce que** pour recouvrir la face supérieure (32) et la face arrière (33) de la plaquette de diamant (6) d'une structure métallique (7, 8), une couche métallique (12, 13) est d'abord appliquée, qui est ensuite structurée par photolithographie.

23. Procédé selon l'une des revendications 15 à 22, **caractérisé en ce que** pour recouvrir la face supérieure (32) et la face arrière (33) de la plaquette de diamant (6) d'un canevas de lamelles métalliques (20, 21), une couche métallique (12, 13) est d'abord appliquée, puis des tranchées d'isolation ou des rainures axiales sont ménagées par photolithographie dans la couche métallique (12, 13).

24. Procédé selon l'une des revendications 15 à 23, **caractérisé en ce que** pour appliquer les circuits de câblage ou les pistes conductrices (10), les surfaces de connexion de contact (22) et/ou les composants passifs sur la plaquette céramique (11), un procédé à couche mince ou à couche épaisse est utilisé.

25. Procédé selon l'une des revendications 15 à 24, **caractérisé en ce que** pour connecter les structures métalliques (7, 8) de la plaquette de diamant (6) aux circuits de câblage ou aux pistes conductrices (10) sur la plaquette céramique (11), un procédé de liaison est utilisé.

26. Procédé selon l'une des revendications 15 à 25, **caractérisé en ce que** pour fixer les composants du détecteur sur un cadre support (23), un châssis d'accrochage métallique (34) est prévu, qui produit en même temps par l'intermédiaire d'une piste conductrice sur la plaquette céramique (11) une connexion de potentiel de la masse.

27. Utilisation du détecteur selon l'une des revendications 1 à 14 pour l'acquisition de faisceaux de particules à haute intensité d'un dispositif de faisceaux avec une intensité de faisceau de 10⁵ à 10¹³ particules par paquet d'impulsion, de préférence avec une intensité de faisceau de 10⁷ à 10¹³ particules par paquet d'impulsion.
